(19) Europäisches Patentamt
European Patent Office
Office européen des brevets

(11) EP 4 314 144 B1

(12) EUROPÄISCHE PATENTSCHRIFT

(45) Veröffentlichungstag und Bekanntmachung des Hinweises auf die Patenterteilung:
**08.04.2026 Patentblatt 2026/15**

(21) Anmeldenummer: **21805486.4**

(22) Anmeldetag: **02.11.2021**

(51) Internationale Patentklassifikation (IPC):
***C08K 5/5313*** (2006.01) ***C08K 5/5317*** (2006.01)
***C08K 7/14*** (2006.01)

(52) Gemeinsame Patentklassifikation (CPC):
(C-Sets verfügbar)
**C08K 5/5317; C08K 5/5313; C08K 7/14** (Forts.)

(86) Internationale Anmeldenummer:
**PCT/EP2021/080418**

(87) Internationale Veröffentlichungsnummer:
**WO 2022/199869 (29.09.2022 Gazette 2022/39)**

(54) **POLYAMIDZUSAMMENSETZUNGEN**

POLYAMIDE COMPOSITIONS

COMPOSITIONS DE POLYAMIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.03.2021 EP 21165195**

(43) Veröffentlichungstag der Anmeldung:
**07.02.2024 Patentblatt 2024/06**

(73) Patentinhaber: **Envalior Deutschland GmbH**
**40474 Düsseldorf (DE)**

(72) Erfinder:
- **ENDTNER, Jochen**
**40474 DÜSSELDORF (DE)**
- **NUESSER, Thorsten**
**40474 DÜSSELDORF (DE)**
- **BIENMÜLLER, Matthias**
**40474 DÜSSELDORF (DE)**

(74) Vertreter: **Envalior Association**
**Urmonderbaan 22**
**6167 RD Geleen (NL)**

(56) Entgegenhaltungen:
**WO-A1-2006/029711 WO-A1-2020/109469**
**WO-A1-2021/076169 WO-A2-2020/132075**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



(Forts. nächste Seite)

(52) Gemeinsame Patentklassifikation (CPC): (Forts.)

C-Sets
**C08K 5/5313, C08L 77/02;**
**C08K 5/5317, C08L 77/02;**
**C08K 7/14, C08L 77/02**

## Beschreibung

Die vorliegende Erfindung betrifft Zusammensetzungen sowie darauf basierende Erzeugnisse auf Basis wenigstens eines Polyamids enthaltend wenigstens ein Aluminiumsalz einer organischen Phosphorverbindung der allgemeinen Formel (I)

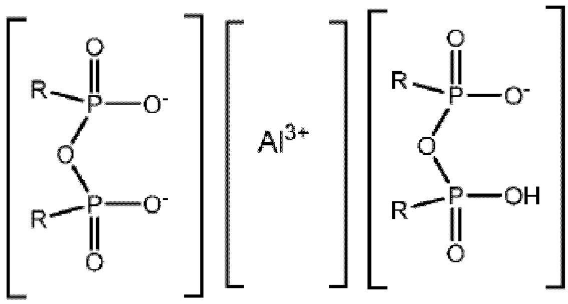

(I),

und wenigstens ein organisches Phosphinsäuresalz und/oder wenigstens ein Diphosphinsäuresalz, ein Verfahren zu deren Herstellung und deren Verwendungen.

## Stand der Technik

Polyamide sind aufgrund ihrer guten mechanischen Stabilität, ihrer chemischen Beständigkeit und der guten Verarbeitbarkeit ein wichtiger Werkstoff zum Beispiel für den Einsatz in Kraftfahrzeugen, in Bauteilen für die Elektro- und Elektronikindustrie oder in Haushaltsgeräten. Bei Anwendungen der Polyamide in der Nähe von stromführenden Teilen werden dabei häufig flammwidrig ausgestattete Materialien eingesetzt, um so der Gefahr einer Brandentstehung, ausgelöst durch überhitzte Drähte oder Kontakte, entgegenzuwirken. Je nach Anwendungsgebiet sind dabei nicht nur eine gute Selbstverlöschungseigenschaft, insbesondere eine UL94 V-0 Klassifizierung gemäß Underwriters Laboratories Inc. Standard of Safety, "Test for Flammability of Plastic Materials for Parts in Devices and Appliances", S. 14 bis S. 18 Northbrook 1998**,** sondern auch eine geringe Entzündlichkeit gefragt. So wird beispielsweise in der IEC60335-1 für Komponenten in unbeaufsichtigten Haushaltsgeräten, die sich innerhalb von 3mm Abstand zu stromführenden Teilen mit Strömen >0,2A befinden, eine Glühdrahtprüfung nach IEC60695-2-11 am Fertigteil vorgeschrieben. Hierbei darf es bei einer Glühdrahttemperatur von 750°C keine Flammerscheinung von mehr als 2 Sekunden geben. Die Erfahrung zeigt, dass Prüfergebnisse am Fertigteil aufgrund undefinierter Geometrie von Fertigteilen oder auch den Wärmefluss beeinträchtigender Metallkontakte nicht direkt mit Prüfergebnissen übereinstimmen, die gemäß IEC60695-2-13 an einer definierten Rundplatte bei gleicher Glühdrahttemperatur durchgeführt wurden, zumal nach IEC60695-2-13 ein Probekörper auch dann noch als nicht entzündet betrachtet wird, wenn er eine Flammerscheinung kleiner als 5 Sekunden zeigt. So wird gemäß IEC60695-2-13 die Klassifizierung "GWIT 775°C" vergeben, wenn 3 Prüfplatten in Folge gemessen bei 750°C keine Flammenerscheinung > 5 Sekunden zeigen.

Um sichergehen zu können, dass ein Material auch am Fertigteil bzw. Erzeugnis und unabhängig von der Geometrie auch bei 750°C Glühdrahttemperatur keine Flamme mit einer Brennzeit länger als 2 Sekunden zeigt, besteht zunehmend der Wunsch nach Materialien, die bei einer Plattenprüfung nach IEC60695-2-13 einen größeren Sicherheitspuffer aufweisen, d.h. dass über die Normanforderungen der IEC60335-1 hinaus, auch ein GWIT oberhalb von 775°C bestanden wird.

Dabei werden im Bereich der Polyamide in jüngster Zeit zunehmend halogenfreie Lösungen eingefordert, was neben ökologischen Gründen auch daran liegt, dass halogenfrei flammgeschützte Polyamide gegenüber halogenhaltigen Systemen in der Regel eine geringere Dichte und höhere Kriechstromfestigkeit nach IEC60112-2010 aufweisen. Beides spielt insbesondere bei Antriebssystemen in der Elektromobilität eine wichtige Rolle.

Wesentlich für den breiten Einsatz in technischen Anwendungen ist aber auch eine hohe Schlagzähigkeit bei gleichzeitig hoher Festigkeit und Steifigkeit, was dem Konstrukteur eine materialsparende und damit auch gewichtssparende und ressourcenschonende Bauteilauslegung erlaubt.

Der Wunsch nach maximaler Designfreiheit und damit höherer Komplexität der Bauteilgeometrie verlangt in Verbindung mit der kostengetriebenen Notwendigkeit nach automatisierbaren und gut integrierbaren Serienfertigungsprozessen zunehmend nach Werkstoffen, die sich auch nach dem Verfahren des Laserdurchstrahlschweißens **[https://de.wikipedia.org/wiki/Laserdurchstrahlschwei%C3%9Fen]** miteinander fügen lassen. Für einen lasertransparenten Fügepartner erfordert dies einen hohen Transmissionsgrad bei der anzuwendenden Laserwellenlänge. Letzteres ist gerade bei Erzeugnissen auf Basis flammgeschützter Polyamide eine große Herausforderung, da Flammschutzmittel das Laserlicht streuen oder sogar absorbieren, wie dies beispielsweise bei dem als Synergist in halogenhaltigen Flammschutzmitteln gebräuchlichen Antimontrioxid der Fall ist.

**Stand der Technik**

Zur Verbesserung der Flammwidrigkeit werden Polyamide mit Flammschutzmitteln ausgerüstet. WO 2006/029711 A1 beschreibt den Einsatz von Aluminiumphosphinsäuresalzen in Kombination mit Melamincyanurat und Melaminpolyphosphat sowie Zinkborat, um in 30 gew.-%igen Glasfaser-verstärkten Polyamid 6 Prüfkörpern im UL 94- Test (0,8 / 1,6 mm) eine V0-Klassifizierung, sowie im GWIT - Test (0,75 mm) 775ºC zu erzielen.

Zwar erfüllen damit die Zusammensetzungen der WO 2006/029711 A1 die Erfordernisse der Hausgerätenorm IEC 60335-1 bei der Glühdrahtprüfung (GWIT von 775°C), jedoch sind hierzu neben dem Aluminiumphosphinsäuresalz mit Melamincyanurat und Melaminpolyphosphat zwei die Lasertransmission stark herabsetzende Stickstoff-haltige Flammschutzmittel, sowie zusätzlich sogar ein Zink-haltiges Flammschutzmittel erforderlich. In der Mechanik erzielen die Zusammensetzungen der WO 2006/029711 A1 Schlagzähigkeiten nach IZOD (ISO 180/1 U, 23 ºC) im Bereich von 50 bis 56 kJ/m$^3$.

Ausgehend vom Stand der Technik bestand deshalb die Aufgabe der vorliegenden Erfindung darin, speziell mit Blick auf Anwendungen und Erzeugnissen für die Elektromobilität, für Haushaltsgeräte sowie im Elektronik- und Elektrobereich, halogenfrei flammgeschützte, verstärkte Polyamidzusammensetzungen mit Potential für eine UL94 V0-Klassifizierung bei gleichzeitig sehr guter Performance in der Glühdrahtentzündlichkeitsprüfung, sehr guter Schlagzähigkeit, sowie insbesondere einer hohen Lasertransmission zwecks Anwendbarkeit für das Laserdurchstrahlschweißverfahren bereit zu stellen, zumindest aber die Vorgaben der WO 2006/029711 A1 zu übertreffen.

Es wurde nun überraschend gefunden, dass die Kombination wenigstens eines phosphorhaltigen Aluminiumsalzes der allgemeinen Formel (I)

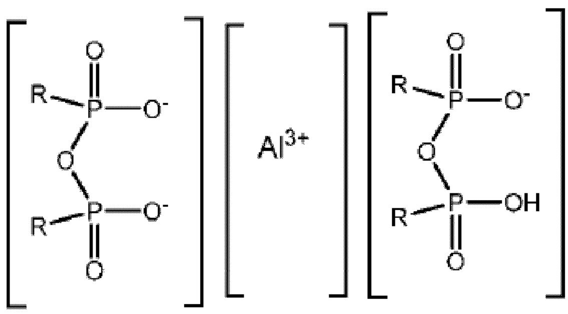 (I),

worin R für $C_1$-$C_{12}$-Alkyl steht, mit wenigstens einem organischen Metallphosphinat oder Diphosphinsäuresalz in verstärkten Polyamid 6 basierten Polymerzusammensetzungen und daraus herzustellenden Erzeugnissen die oben genannte komplexe Aufgabenstellung erfüllt.

Die im Rahmen der vorliegenden Erfindung zur Gewinnung mechanischer Kennwerte verwendete IZOD-Schlagzähigkeit nach DIN EN ISO 180 kann sowohl für steife thermoplastische Spitzguss- und Extrusionsformmassen, duroplastische Werkstoffe und thermotrope flüssigkristalline Polymere, als auch für gefüllte und verstärkte Werkstoffe herangezogen werden. Dabei wird die beim Bruch aufgenommene Schlagarbeit $E_C$ eines ungekerbten Prüfkörpers auf die Anfangsquerschnittsfläche des Prüfkörpers bezogen, entsprechend der folgenden Gleichung:

$$a_{iU} = \frac{E_c}{h \cdot b}$$

mit $a_{iU}$ = Schlagzähigkeit, $h$ = Dicke und $b$ = Breite.

Die hierbei einzusetzenden Prüfkörper können nach der entsprechenden Formmassen-Norm oder durch Pressen und Spritzgießen hergestellt oder aus Vielzweckprüfkörpern entnommen werden (DIN EN ISO 527 [2]). Die Abmessungen des im Rahmen der vorliegenden Erfindung eingesetzten ungekerbten Prüfkörper nach DIN EN ISO 3167, Typ A sind:

$$\text{Länge } l = (80 \pm 2)\ \text{mm}$$

$$\text{Breite } b = (10{,}0 \pm 0{,}2)\ \text{mm}$$

$$\text{Dicke } h = (4{,}0 \pm 0{,}2) \text{ mm}$$

Siehe hierzu:
**https://wiki.polymerservice-merseburg.de/index.php/Schlagbiegeversuch**

Unter einer hohen Lasertransmission gilt erfindungsgemäß eine Lasertransmission von mindestens 30%, bevorzugt mindestens 40%, besonders bevorzugt mindestens 50%, gemessen an Plättchen mit einer Dicke von 0,75 mm mit dem Transmissionsmessgerät LPKF TMG3 der Firma LPKF Laser & Electronics AG, Garbsen, Deutschland bei einer Laserwellenlänge von 980 nm. Das Transmissionsmessgerät LPKF TMG3 ist ein zertifiziertes, rückführbar kalibriertes Messinstrument. Seine Messmittelfähigkeit wurde im Rahmen einer statistischen Messsystemanalyse (MSA) nachgewiesen. Das Gerät entspricht zudem den Vorgaben der **Automotive-Norm IATF 16949** und ist damit direkt zur normkonformen Qualitätssicherung qualifiziert. Die Messungen im Rahmen der vorliegenden Erfindung erfolgen auf Basis der **DVS-Richtlinie 2243 (01/2014) "Laserstrahlschweißen thermoplastischer Kunststoffe"** anhand von Rundplatten mit 80mm Durchmesser und 0,75 mm Dicke im nahen Infrarot (NIR). Das Transmissionsmessgerät LPKF TMG3 der Firma LPKF Laser & Electronics AG wird vor den Messungen mit einem nach DIN EN ISO/IEC 17025 erzeugten Messnormal kalibriert. Die Messungen erfolgen im Rahmen der vorliegenden Erfindung bei einer Laserwellenlänge von 980 nm.

Erfindungsgemäße Zusammensetzungen sollen schließlich in Bezug auf die in WO 2006/029711 A1 vorgegebene UL94 V0 Klassifizierung, basierend auf der Methode UL94V **(**Underwriters Laboratories Inc. Standard of Safety, "Test for Flammability of Plastic Materials for Parts in Devices and Appliances", S. 14 - 18 Northbrook 1998**),** keine Verschlechterung zeigen.

### Erfindungsgegenstand

Gegenstand der Erfindung sind Polymerzusammensetzungen enthaltend

A) auf 100 Massenanteile Polyamid 6

B) 2 bis 100 Massenanteile, bevorzugt 5 bis 60 Massenanteile, besonders bevorzugt 7 bis 40 Massenanteile, insbesondere bevorzugt 8 bis 20 Massenanteile wenigstens eines Aluminiumsalzes der allgemeinen Formel (I)

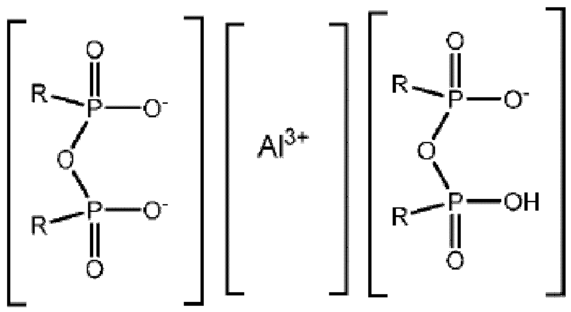

(I),

worin R für $C_1$-$C_{12}$-Alkyl steht, vorzugsweise für Methyl, Ethyl, Isopropyl oder iso-Butyl, tert.-Butyl oder n-Butyl, besonders bevorzugt für Ethyl oder Methyl, ganz besonders bevorzugt für Methyl, und

C) 5 bis 120 Massenanteile, bevorzugt 7 bis 80 Massenanteile, besonders bevorzugt 8 bis 60 Massenanteile, insbesondere bevorzugt 10 bis 50 Massenanteile wenigstens eines organischen Phosphinsäuresalzes der Formel (II) und/oder wenigstens eines Diphosphinsäuresalzes der Formel (III) und/oder deren Polymere,

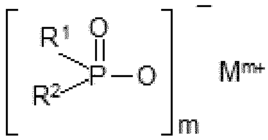

(II)

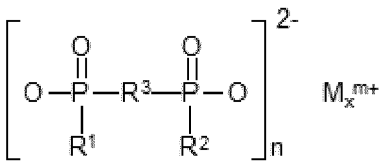

(III)

worin

$R^1$, $R^2$ gleich oder verschieden sind und für ein lineares oder verzweigtes $C_1$-$C_6$-Alkyl, und/oder für $C_6$-$C_{14}$-Aryl stehen,

$R^3$ für lineares oder verzweigtes $C_1$-$C_{10}$-Alkylen, $C_6$-$C_{10}$-Arylen oder für $C_1$-$C_6$-Alkyl-$C_6$-$C_{10}$-arylen oder $C_6$-$C_{10}$-Aryl-$C_1$-$C_6$-alkylen steht,
M für Aluminium, Zink oder Titan steht,
m für eine ganze Zahl von 1 bis 4 steht;
n für eine ganze Zahl von 1 bis 3 steht,
x für 1 und 2 steht,
wobei n, x und m in Formel (III) gleichzeitig nur solche ganzen Zahlen annehmen können, dass das Diphosphinsäuresalz der Formel (III) als Ganzes ungeladen ist, und

D) 3 bis 300 Massenanteile, bevorzugt 5 bis 200 Massenanteile, besonders bevorzugt zu 15 bis 120 Massenanteile, insbesondere bevorzugt 20 bis 90 Massenanteile wenigstens eines Füll und/oder Verstärkungsstoffs.

Gegenstand der Erfindung sind auch Erzeugnisse basierend auf den erfindungsgemäßen Zusammensetzungen, insbesondere Erzeugnisse für die Elektromobilität, für Haushaltsgeräte sowie im Elektronik- und Elektrobereich.

Die vorliegende Erfindung betrifft aber auch die **Verwendung** von 2 bis 100 Massenanteilen, bevorzugt 5 bis 60 Massenanteilen, besonders bevorzugt 7 bis 40 Massenanteilen, insbesondere bevorzugt 8 bis 20 Massenanteilen wenigstens eines Aluminiumsalzes der allgemeinen Formel (I)

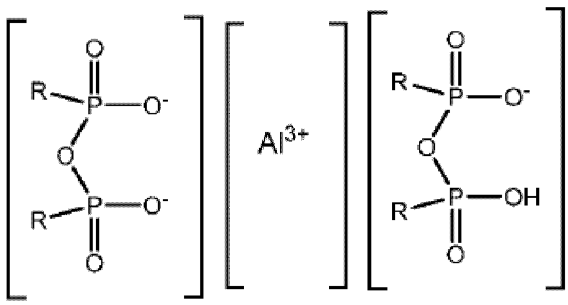
(I),

worin R für $C_1$-$C_{12}$-Alkyl steht, vorzugsweise für Methyl, Ethyl, Isopropyl oder iso-Butyl, tert.-Butyl oder n-Butyl, besonders bevorzugt für Ethyl oder Methyl, ganz besonders bevorzugt für Methyl, und

5 bis 120 Massenanteilen, bevorzugt 7 bis 80 Massenanteilen, besonders bevorzugt 8 bis 60 Massenanteilen, insbesondere bevorzugt 10 bis 50 Massenanteilen wenigstens eines organischen Phosphinsäuresalzes der Formel (II) und/oder wenigstens eines Diphosphinsäuresalzes der Formel (III) und/oder deren Polymere,

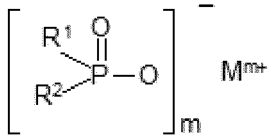
(II)

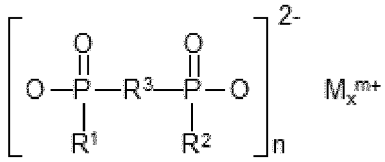
(III)

worin

$R^1$, $R^2$ gleich oder verschieden sind und für ein lineares oder verzweigtes $C_1$-$C_6$-Alkyl, und/oder für $C_6$-$C_{14}$-Aryl stehen,

$R^3$ für lineares oder verzweigtes $C_1$-$C_{10}$-Alkylen, $C_6$-$C_{10}$-Arylen oder für $C_1$-$C_6$- Alkyl-$C_6$-$C_{10}$-arylen oder $C_6$-$C_{10}$-Aryl-$C_1$-$C_6$-alkylen steht,

M für Aluminium, Zink oder Titan steht,
m für eine ganze Zahl von 1 bis 4 steht;
n für eine ganze Zahl von 1 bis 3 steht,
x für 1 und 2 steht,

wobei n, x und m in Formel (III) gleichzeitig nur solche ganzen Zahlen annehmen können, dass das Diphosphinsäuresalz der Formel (III) als Ganzes ungeladen ist, jeweils bezogen auf 100 Massenanteile Polyamid 6, das mit 3 bis 300 Massenanteilen, bevorzugt 5 bis 200 Massenanteilen, besonders bevorzugt zu 15 bis 120 Massenanteilen, insbesondere bevorzugt 20 bis 90 Massenanteilen wenigstens eines Füll und/oder Verstärkungsstoffs verstärkt ist, zur Herstellung lasertransparenter Zusammensetzungen oder Erzeugnisse, vorzugsweise zudem mit einem GWIT bei 0,75mm Wandstärken von mindestens 800ºC.

Die Zubereitung erfindungsgemäßer Polyamid basierter Polymerzusammensetzungen für die Anwendung in Erzeugnissen in der Elektromobilität, in Haushaltsgeräten sowie im Elektronik- und Elektrobereich, erfolgt durch Mischen der als Edukte einzusetzenden Komponenten A), B), C) und D) in wenigstens einem Mischwerkzeug in den oben angegebenen Massenverhältnissen. Durch das Mischen werden als Zwischenprodukte, auf den erfindungsgemäßen Polymerzusammensetzungen basierende, Formmassen erhalten. Diese Formmassen können entweder ausschließlich aus den Komponenten A), B), C) und D) bestehen, oder aber zusätzlich noch wenigstens eine weitere Komponente enthalten. Im Falle, dass lasertransparente Polymerzusammensetzungen bereitgestellt werden sollen, sind weitere Komponenten so auszuwählen, dass auf laserabsorbierende Additive verzichtet wird.

Ferner ist Gegenstand der vorliegenden Erfindung ein **Verfahren** zur Herstellung von Erzeugnissen, vorzugsweise Erzeugnissen für die Elektromobilität, für Haushaltsgeräte sowie im Elektronik- und Elektrobereich, indem man die Komponente A) 100 Massenanteile Polyamid 6 mit

B) 2 bis 100 Massenanteilen, bevorzugt 5 bis 60 Massenanteilen, besonders bevorzugt 7 bis 40 Massenanteilen, insbesondere bevorzugt 8 bis 20 Massenanteilen wenigstens eines Aluminiumsalzes der allgemeinen Formel (I)

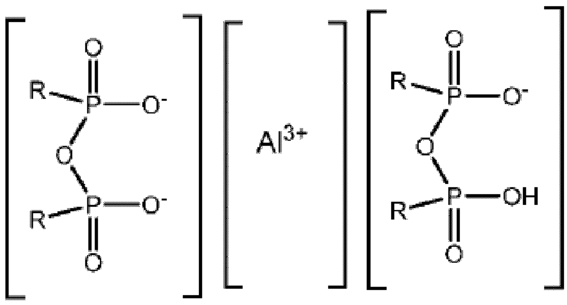

(I),

worin R für $C_1$-$C_{12}$-Alkyl steht, vorzugsweise für Methyl, Ethyl, Isopropyl oder iso-Butyl, tert.-Butyl oder n-Butyl, besonders bevorzugt für Ethyl oder Methyl, ganz besonders bevorzugt für Methyl, und

C) 5 bis 120 Massenanteilen, bevorzugt 7 bis 80 Massenanteilen, besonders bevorzugt 8 bis 60 Massenanteilen, insbesondere bevorzugt 10 bis 50 Massenanteilen wenigstens eines organischen Phosphinsäuresalzes der Formel (II) und/oder wenigstens eines Diphosphinsäuresalzes der Formel (III) und/oder deren Polymere,

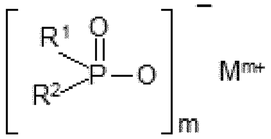

(II)

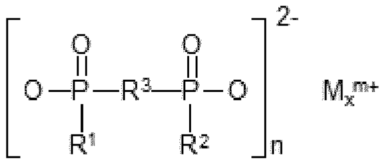

(III)

worin

$R^1$, $R^2$ gleich oder verschieden sind und für ein lineares oder verzweigtes $C_1$-$C_6$-Alkyl, und/oder für $C_6$-$C_{14}$-Aryl stehen,

$R^3$ für lineares oder verzweigtes $C_1$-$C_{40}$-Alkylen, $C_6$-$C_{10}$-Arylen oder für $C_1$-$C_6$-Alkyl-$C_6$-$C_{10}$-arylen oder $C_6$-$C_{10}$-Aryl-$C_1$-$C_6$-alkylen steht,

M für Aluminium, Zink oder Titan steht,
m für eine ganze Zahl von 1 bis 4 steht;
n für eine ganze Zahl von 1 bis 3 steht,
x für 1 und 2 steht,

wobei n, x und m in Formel (III) gleichzeitig nur solche ganzen Zahlen annehmen können, dass das Diphosphinsäuresalz der Formel (III) als Ganzes ungeladen ist, mit

D) 3 bis 300 Massenanteilen, bevorzugt 5 bis 200 Massenanteilen, besonders bevorzugt zu 15 bis 120 Massenanteilen, insbesondere bevorzugt 20 bis 90 Massenanteilen wenigstens eines Füll und/oder Verstärkungsstoffs

sowie gegebenenfalls mit weiteren Additiven in wenigstens einem Mischaggregat mischt oder vermengt und schließlich im Spritzguss verarbeitet.

Vorzugsweise werden die Komponenten zu einer Formmasse geknetet, compoundiert, extrudiert oder gewalzt. Bevorzugt erfolgt dieses Mischen bei einer Temperatur im Bereich von 230 bis 300°C, besonders bevorzugt durch Compoundieren auf einem gleichläufigen Zweiwellenextruder oder Buss-Kneter. Es kann vorteilhaft sein, einzelne Komponenten vorzumischen.

Zur Klarstellung sei angemerkt, dass vom Rahmen der vorliegenden Erfindung alle aufgeführten allgemeinen oder in Vorzugsbereichen genannten Definitionen und Parameter in beliebigen Kombinationen umfasst sind. Dies betrifft insbesondere die angegebenen Massenanteile hinsichtlich der Polymerzusammensetzungen, der erfindungsgemäß beschriebenen Verwendung(en) und der erfindungsgemäß beschriebenen Verfahren. Die im Rahmen dieser Anmeldung genannten Normen beziehen sich auf die zum Anmeldetag dieser Erfindung geltenden Fassung. Eine Arylgruppe (abgekürzt: Ar) ist ein organisch-chemischer Rest mit einem aromatischen Grundgerüst. Aryl ist somit die allgemeine Bezeichnung für eine einwertige Atomgruppe, die sich von aromatischen Kohlenwasserstoffen durch Entzug eines an den Ring gebundenen Wasserstoffatoms ableiten. Die meisten Arylreste leiten sich vom Benzol ($C_6H_6$) ab, die einfachste Arylgruppe ist die Phenylgruppe (Ph), ($-C_6H_5$). Arylreste können entweder als Fragment eines Moleküls oder als instabiles freies Radikal auftreten.

## Weitere bevorzugte Ausführungsformen der Erfindung

In einer weiteren bevorzugten Ausführungsform betrifft die Erfindung ferner Polymerzusammensetzungen enthaltend zusätzlich zu den Komponenten A) bis D) noch wenigstens ein weiteres **von den Komponenten B), C) und D) verschiedenes Additiv,** bevorzugt zu 0,01 bis 100 Massenanteilen, besonders bevorzugt zu 0,05 bis 50 Massenanteilen, ganz besonders bevorzugt zu 0,1 bis 30 Massenanteilen, jeweils bezogen auf 100 Massenanteile der Komponente A) mit der Maßgabe, dass bei Bedarf eines Erhalt der Lasertransparenz auf laserabsorbierende Additive verzichtet wird.

## Komponente A)

Das erfindungsgemäß als Komponente A) im Rahmen der vorliegenden Erfindungen einzusetzende **Polyamid 6** [CAS Nr. 25038-54-4] hat vorzugsweise eine nach ISO 307 in 0,5 gew.-%iger Lösung in 96 gew.-%iger Schwefelsäure bei 25°C zu bestimmende Viskositätszahl im Bereich von 80 bis 180 ml/g, besonders bevorzugt im Bereich von 85 bis 160 ml/g und ganz besonders bevorzugt im Bereich von 90 bis 140 ml/g. Erfindungsgemäß bevorzugt als Komponente A) einzusetzendes Polyamid 6 ist beispielsweise als Durethan® B26 bei der Lanxess Deutschland GmbH, Köln erhältlich.

Die im Rahmen der vorliegenden Anmeldung benutzte Kennzeichnung der Polyamide entspricht der internationalen Norm ISO 1874-1, wobei die erste(n) Ziffer(n) die C-Atomzahl des Ausgangsdiamins und die letzte(n) Ziffer(n) die C-Atomzahl der Dicarbonsäure angeben. Wird nur eine Zahl angegeben, wie im Falle des Polyamid 6 (PA6), so bedeutet dies, dass von dem davon abgeleiteten Lactam, im Falle des PA 6 also dem ε-Caprolactam, ausgegangen worden ist.

Das erfindungsgemäß als Komponente A) einzusetzende Polyamid 6 kann auch im Gemisch mit wenigstens einem anderen Polyamid und/oder wenigstens einem anderen Polymer eingesetzt werden. Erfindungsgemäß umfasst sind deshalb auch alle auf Polyamid 6 basierende Copolyamide. Bevorzugte andere Polymere werden ausgewählt aus der Gruppe Polyethylen, Polypropylen und Acrylnitril-Butadien-Styrol-Copolymerisat (ABS). Im Falle des Einsatzes wenigstens eines weiteren Polyamids oder wenigstens eines anderen Polymers erfolgt dieser vorzugsweise oder gegebenenfalls unter Einsatz wenigstens eines Kompatibilisators.

Dem als Komponente A) einzusetzenden Polyamid 6 können übliche Additive, vorzugsweise dem Fachmann bekannte Entformungsmittel, Stabilisatoren und/oder Fließhilfsmittel bereits in der Schmelze zugemischt werden.

## Komponente B)

Als erfindungsgemäß einzusetzende Komponente B) wird wenigstens ein Aluminiumsalz der allgemeinen Formel (I) eingesetzt,

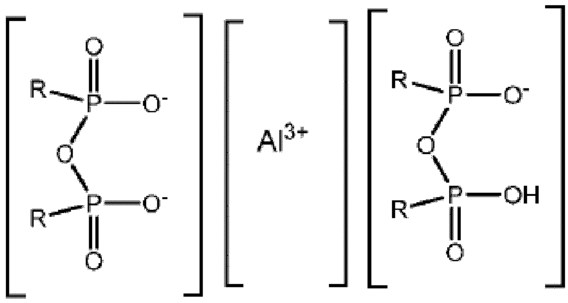

(I),

worin R für $C_1$-$C_{12}$-Alkyl steht, vorzugsweise für Methyl, Ethyl, Isopropyl oder iso-Butyl, tert.-Butyl oder n-Butyl, besonders bevorzugt für Ethyl oder Methyl, ganz besonders bevorzugt für Methyl.

Diese erfindungsgemäß als Komponente B) im Rahmen der vorliegenden Erfindung einzusetzenden Aluminiumsalze organischer Phosphorverbindungen mit der allgemeinen Formel (I) können nach verschiedenen Verfahren hergestellt und aus unterschiedlichen Bausteinen synthetisiert werden. Im Rahmen der vorliegenden Erfindung wird zur Herstellung der Verbindung (Ia) mit R = Methyl folgendes Verfahren genutzt:

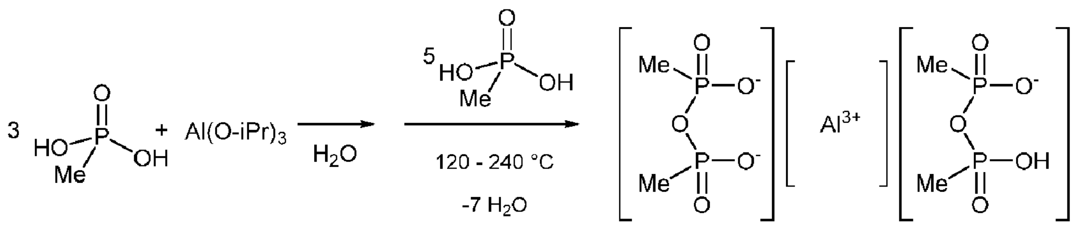


(Ia)

Ein Reaktionskessel wird mit 83 g Methylphosphonsäure beschickt und auf 120°C erhitzt. Ein Zwischenprodukt hergestellt aus 50 g Methylphosphonsäure und 35,4 g Aluminium-tris(isopropoxid) wird in Gegenwart von Wasser dem Reaktionskessel zugegeben. Die resultierende Lösung, welche als Zwischenprodukte Methylphosphonsäure und Aluminium-methylphosphonat im Molverhältnis von 5 : 1 enthält, wird unter mechanischem Rühren auf 240°C erhitzt. Das Rühren wird bei 240°C etwa 30 Minuten lang fortgesetzt bis sich ein Feststoff bildet. Anschließend werden 500 ml Wasser zugegeben und diese Mischung für 16 h gerührt, währenddessen eine gleichmäßige Aufschlämmung entsteht. Das Produkt wird schließlich abfiltriert, mit 750 ml Wasser gewaschen und getrocknet. Das Resultat sind 64,3 g des als Komponente B) einzusetzenden Produkts der Formel (Ia) als feine farblose Kristalle bei einer Ausbeute von 93 %. Die empirische Formel (Ia) repräsentiert sich wiederholende Monomereinheiten (i.e. Koordinationseinheiten) eines Koordinationspolymers das in Kristallform vorliegt.

Weitere Verfahren, insbesondere für R ≠ Methyl sind der WO 2020/132075 A1 zu entnehmen, deren Inhalt von der vorliegenden Erfindung vollumfänglich umfasst ist.

Besonders bevorzugt ist die Komponente B) gemäß der Formel (Ia) mit einem nach ICP-OES Elementaranalyse zu bestimmenden molaren Verhältnis von Phosphor zu Aluminium von 4 : 1, wobei nadelförmige Kristalle besonders bevorzugt sind. Siehe hierzu Beispiel 3 in WO 2021/076169 A1 sowie zu ICP-OES siehe: **https://www.itmc.rwth-aachen.de/go/id/gden**

**Komponente C)**

Als Komponente C) enthalten die erfindungsgemäßen Zusammensetzungen wenigstens ein Phosphinsäuresalz der Formel (II)

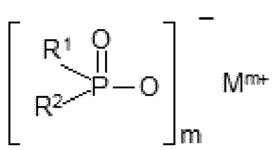

(II)

und/oder wenigstens ein Diphosphinsäuresalz der Formel (III)

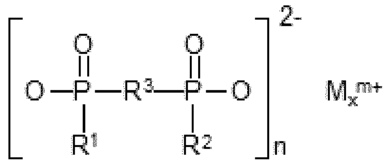

(III)

und/oder deren Polymere. Phosphinsäuresalze der Formel (II) und Diphosphinsäuresalze der Formel (III) werden im Rahmen der vorliegenden Erfindung auch als Phosphinate bezeichnet.

Bevorzugt steht M in den Formeln (II) oder (III) für Aluminium. Bevorzugt sind $R^1$, $R^2$ in den Formeln (II) und (III) gleich oder verschieden und bedeuten $C_1$-$C_6$-Alkyl, linear oder verzweigt und/oder Phenyl. Besonders bevorzugt sind $R^1$, $R^2$ gleich oder verschieden und bedeuten Methyl, Ethyl, n-Propyl, iso-Propyl, n-Butyl, tert.-Butyl, n-Pentyl und/oder Phenyl.

Bevorzugt bedeutet $R^3$ in Formel (III) Methylen, Ethylen, n-Propylen, iso-Propylen, n-Butylen, tert.-Butylen, n-Pentylen, n-Octylen, n-Dodecylen, Phenylen, Naphthylen, Methyl-phenylen, Ethylphenylen, tert.-Butylphenylen, Methylnaphthylen, Ethylnaphthylen, tert.-Butylnaphthylen, Phenylmethylen, Phenylethylen, Phenylpropylen oder Phenylbutylen. Besonders bevorzugt bedeutet $R^3$ Phenylen oder Naphthylen. Geeignete Phosphinate sind in der WO-A 97/39053 beschrieben, deren Inhalt in Bezug auf die Phosphinate von der vorliegenden Anmeldung mit umfasst wird. Besonders bevorzugte Phosphinate im Sinne der vorliegenden Erfindung sind Aluminium- und Zinksalze des Dimethylphosphinats, des Ethylmethylphosphinats, des Diethylphosphinats und des Methyl-n-propylphosphinats sowie deren Mischungen.

Bevorzugt steht m in Formel (II) für 2 und 3, besonders bevorzugt für 3.

Bevorzugt steht n in Formel (III) für 1 und 3, besonders bevorzugt für 3.

Bevorzugt steht x in Formel (III) für 1 und 2, besonders bevorzugt für 2.

Ganz besonders bevorzugt wird als Komponente C) Aluminium-tris(diethylphosphinat) [CAS Nr. 225789-38-8] eingesetzt, das z.B. von der Fa. Clariant International Ltd. Muttenz, Schweiz unter dem Handelsnamen Exolit® OP1230 oder Exolit® OP1240 angeboten wird.

Vorzugsweise wird Komponente B) in geringeren Massenanteilen als Komponente C) eingesetzt.

**Komponente D)**

Erfindungsgemäße Polymerzusammensetzungen enthalten als Komponente D) wenigstens ein **Füllstoff und/oder Verstärkungsstoff.** Dabei können auch Mischungen aus zwei oder mehreren unterschiedlichen Füllstoffen und/oder Verstärkungsstoffen eingesetzt werden.

Vorzugsweise wird als Komponente D) wenigstens ein Füll- und/oder Verstärkungsstoff aus der Gruppe Kohlenstofffasern [CAS Nr. 7440-44-0], Glaskugeln, Voll- oder Hohlglaskugeln, Glasfasern, gemahlenes Glas, amorphes Quarzglas, Aluminium-Borsilikatglas mit einem Alkaligehalt 1% (E-Glas) [CAS Nr. 65997-17-3], amorphe Kieselsäure [CAS Nr. 7631-86-9], Quarzmehl [CAS Nr. 14808-60-7], Calciumsilicat [CAS Nr. 1344-95-2], Calciummetasilicat [CAS Nr. 10101-39-0], Magnesiumcarbonat [CAS Nr. 546-93-0], Kaolin [CAS Nr. 1332-58-7], calciniertes Kaolin [CAS Nr. 92704-41-1], Kreide [CAS Nr.1317-65-3], Kyanit [CAS Nr. 1302-76-7], gepulverter oder gemahlener Quarz [CAS Nr. 14808-60-7], Glimmer [CAS Nr. 1318-94-1], Phlogopit [CAS Nr. 12251-00-2], Bariumsulfat [CAS Nr. 7727-43-7], Feldspat [CAS Nr. 68476-25-5], Wollastonit [CAS Nr. 13983-17-0], Montmorillonit [CAS Nr. 67479-91-8], Pseudoböhmit der Formel AlO(OH), Magnesiumcarbonat [CAS Nr. 12125-28-9] und Talkum [CAS Nr. 14807-96-6] eingesetzt.

Unter den faserförmigen Füllstoffen oder Verstärkungsstoffen sind Glasfasern und Wollastonit besonders bevorzugt, wobei Glasfasern ganz besonders bevorzugt sind. Im Falle eines laserabsorbierenden Bauteils bzw. Erzeugnisses können auch Kohlenstofffasern als Füllstoff oder Verstärkungsstoff eingesetzt werden.

Besonders bevorzugt wird als Komponente D) Glas als Füll- und/oder Verstärkungsstoff eingesetzt. Vorzugsweise wird Glas gemäß DIN1259-1 eingesetzt. Ganz besonders bevorzugte wird Glas als Voll- oder Hohlglaskugeln, Glasfasern, gemahlenes Glas oder Aluminium-Borsilikatglas mit einem Alkaligehalt 1% (E-Glas) [CAS Nr. 65997-17-3] eingesetzt.

Bezüglich der Glasfasern unterscheidet der Fachmann gemäß **"http://de.wikipedia.org/wiki/Faser-Kunststoff-Verbund"** geschnittene Fasern, auch als Kurzfasern bezeichnet, mit einer Länge im Bereich von 0,1 bis 1 mm, Langfasern mit einer Länge im Bereich von 1 bis 50 mm und Endlosfasern mit einer Länge L > 50 mm. Kurzfasern werden vorzugsweise in der Spritzgusstechnik eingesetzt und können direkt mit einem Extruder verarbeitet werden. Langfasern können ebenfalls noch in Extrudern verarbeitet werden. Endlosfasern werden als Rovings oder Gewebe in faserverstärkten Kunststoffen eingesetzt. Erzeugnisse mit Endlosfasern erzielen die höchsten Steifigkeits- und Festigkeitswerte. Des Weiteren werden gemahlene Glasfasern angeboten, deren Länge nach der Vermahlung typischerweise im

Bereich von 70 bis 200 μm liegt.

Erfindungsgemäß bevorzugt als Komponente D) einzusetzende Glasfasern sind geschnittene Langglasfasern mit einer mittleren Ausgangslänge im Bereich von 1 bis 50 mm, besonders bevorzugt im Bereich von 1 bis 10 mm, ganz besonders bevorzugt im Bereich von 2 bis 7 mm.

Bevorzugte, als Komponente D) einzusetzende Glasfasern haben einen mittleren Faserdurchmesser im Bereich von 7 bis 18 μm, besonders bevorzugt im Bereich von 9 bis 15 μm. Als ein mögliches Verfahren zur Bestimmung der Faserdurchmesser kann dabei die Rasterelektronenmikroskopie (REM) herangezogen werden **(https://de.wikipedia.org/wiki/Rasterelektronenmikroskop).**

Die als Komponente D) vorzugsweise einzusetzenden Glasfasern werden in einer bevorzugten Ausführungsform mit einem geeigneten Schlichtesystem oder einem Haftvermittler bzw. Haftvermittlersystem ausgerüstet. Bevorzugt wird ein Schlichtesystem bzw. ein Haftvermittler auf Silanbasis eingesetzt. Besonders bevorzugte Haftvermittler auf Silanbasis für die Behandlung der als Komponente D) vorzugsweise einzusetzenden Glasfasern sind Silanverbindungen der allgemeine Formel (IV)

$$(X-(CH_2)_q)_k-Si-(O-CrH_{2r+1})_{4-k} \qquad (IV)$$

worin

X für $NH_2$-, Carboxyl-, HO- oder steht,

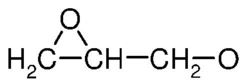

q in Formel (IV) für eine ganze Zahl von 2 bis 10, bevorzugt 3 bis 4 steht,

r in Formel (IV) für eine ganze Zahl von 1 bis 5, bevorzugt 1 bis 2 steht und

k in Formel (IV) für eine ganze Zahl von 1 bis 3, bevorzugt 1 steht.

Insbesondere bevorzugte Haftvermittler sind Silanverbindungen aus der Gruppe Aminopropyltrimethoxysilan, Aminobutyltrimethoxysilan, Aminopropyltriethoxysilan, Aminobutyltriethoxysilan sowie die entsprechenden Silane, welche als Substituent X in Formel (IV) eine Glycidyl- oder eine Carboxylgruppe enthalten, wobei Carboxylgruppen insbesondere ganz besonders bevorzugt sind.

Für die Ausrüstung der als Komponente D) vorzugsweise einzusetzenden Glasfasern wird der Haftvermittler, bevorzugt die Silanverbindungen gemäß Formel (IV), vorzugsweise in Mengen von 0,05 bis 2 Gew.-%, besonders bevorzugt in Mengen von 0,25 bis 1,5 Gew.-% und ganz besonders bevorzugt in Mengen von 0,5 bis 1 Gew.-%, jeweils bezogen auf 100 Gew.-% Komponente D), eingesetzt.

Die als Komponente D) vorzugsweise einzusetzenden Glasfasern können bedingt durch die Verarbeitung zur Zusammensetzung bzw. zum Erzeugnis in der Zusammensetzung bzw. im Erzeugnis kürzer sein, als die ursprünglich eingesetzten Glasfasern. So liegt der mittels hochauflösender Röntgencomputertomographie zu bestimmende arithmetische Mittelwert der Glasfaserlänge nach der Verarbeitung häufig nur noch im Bereich von 150 μm bis 300 μm.

Gemäß **"http://www.r-g.de/wiki/Glasfasern"** werden Glasfasern im Schmelzspinnverfahren (Düsenzieh-, Stabzieh- und Düsenblasverfahren) hergestellt. Beim Düsenziehverfahren fließt unter Ausnutzung der Schwerkraft die heiße Glasmasse durch hunderte Düsenbohrungen einer Platinspinnplatte. Die Elementarfäden können in unbegrenzter Länge mit einer Geschwindigkeit von 3 - 4 km/Minute gezogen werden.

Der Fachmann unterscheidet verschiedene Glasfasersorten, wovon hier beispielsweise einige gelistet sind:

- E-Glas, das meistverwendete Material mit optimalem Preis-Leistungsverhältnis (E-Glas von R&G) mit einer Zusammensetzung gemäß **https://www.r-g.de/wiki/Glasfasern** von 53-55 % $SiO_2$, 14-15 % $Al_2O_3$, 6-8% $B_2O_3$, 17-22% CaO, <5% MgO, <1% $K_2O$ bzw. $Na_2O$ und ca. 1% andere Oxide;
- H-Glas, Hohlglasfasern für reduziertes Gewicht (R&G Glashohlfasergewebe 160 $g/m^2$ und 216 $g/m^2$);
- R, S-Glas, für erhöhte mechanische Anforderungen (S2-Glas von R&G);
- D-Glas, Borsilicatglas für erhöhte elektrische Anforderungen;

- C-Glas, mit erhöhter chemischer Widerstandsfähigkeit;
- Quarzglas, mit hoher Temperaturbeständigkeit.

Weitere Beispiele finden sich unter **"http://de.wikipedia.org/wiki/Glasfaser".** Für die Kunststoffverstärkung haben E-Glasfasern die größte Bedeutung erlangt. Das "E" in E-Glas steht für Elektro-Glas, da es ursprünglich vor allem in der Elektroindustrie eingesetzt wurde.

Für die Produktion von E-Glas werden Glasschmelzen aus reinem Quarz mit Zusätzen aus Kalkstein, Kaolin und Borsäure hergestellt. Sie enthalten neben Siliziumdioxid unterschiedliche Mengen verschiedener Metalloxide. Die Zusammensetzung bestimmt die Eigenschaften der Produkte. Erfindungsgemäß bevorzugt wird wenigstens eine Sorte Glasfasern aus der Gruppe E-Glas, H-Glas, R,S-Glas, D-Glas, C-Glas und Quarzglas eingesetzt, besonders bevorzugt Glasfasern aus E-Glas.

Glasfasern aus E-Glas sind der am weitesten verbreitete Verstärkungswerkstoff. Die Festigkeitseigenschaften entsprechen denen von Metallen (z. B. Alu-Legierungen), wobei das spezifische Gewicht von E-Glasfasern enthaltenden Laminaten niedriger ist, als das der Metalle. E-Glasfasern sind unbrennbar, hitzefest bis ca. 400°C und beständig gegen die meisten Chemikalien und Witterungseinflüsse.

Bevorzugt werden als Komponente D) ferner auch nadelförmige mineralische Füllstoffe eingesetzt. Unter nadelförmigen, mineralischen Füllstoffen wird erfindungsgemäß ein mineralischer Füllstoff mit stark ausgeprägtem nadelförmigen Charakter verstanden. Bevorzugt als Komponente D) einzusetzender nadelförmiger mineralischer Füllstoff ist Wollastonit. Bevorzugt weist der nadelförmige, mineralische Füllstoff ein mittels hochauflösender Röntgencomputertomographie zu bestimmendes Länge : Durchmesser - Verhältnis im Bereich von 2:1 bis 35:1, besonders bevorzugt im Bereich von 3:1 bis 19:1, insbesondere bevorzugt im Bereich von 4:1 bis 12:1 auf. Die mittels hochauflösender Röntgencomputertomographie zu bestimmende mittlere Teilchengröße der nadelförmigen, mineralischen Füllstoffe liegt bevorzugt bei kleiner 20 $\mu$m, besonders bevorzugt bei kleiner 15 $\mu$m, insbesondere bevorzugt bei kleiner 10 $\mu$m.

Bevorzugt wird als Komponente D) aber auch nicht-faserförmiges und nicht-geschäumtes gemahlenes Glas mit einer mittels Laserdiffraktometrie gemäß **ISO 13320** zu bestimmenden Teilchengrößenverteilung mit einem d90 im Bereich von 5 bis 250 $\mu$m eingesetzt, bevorzugt im Bereich von 10 bis 150 $\mu$m, besonders bevorzugt im Bereich von 15 bis 80 $\mu$m, ganz besonders bevorzugt im Bereich von 16 bis 25 $\mu$m. Bezüglich der d90-Werte, ihrer Bestimmung und ihrer Bedeutung sei auf Chemie Ingenieur Technik (72) S. 273-276, 3/2000, Wiley-VCH Verlags GmbH, Weinheim, 2000 verwiesen, wonach der d90-Wert diejenige Partikelgröße ist, unterhalb derer 90 % der Partikelmenge liegen.

Erfindungsgemäß bevorzugt ist nicht-faserförmiges und nicht-geschäumtes gemahlenes Glas von partikelförmiger, nicht zylindrischer Gestalt das einen mittels Rasterelektronenmikroskopie zu bestimmendes Längen- zu Dickenverhältnis kleiner 5, bevorzugt kleiner als 3, besonders bevorzugt kleiner 2 hat. Der Wert Null ist selbstverständlich ausgeschlossen.

Das als Komponente D) in einer Ausführungsform einzusetzende nicht-geschäumte und nicht faserförmige gemahlene Glas ist zudem dadurch gekennzeichnet, dass es nicht die für faserförmiges Glas typische Glasgeometrie mit zylindrischem oder ovalen Querschnitt mit einem mittels Rasterelektronenmikroskopie zu bestimmenden Längen- zu Durchmesserverhältnis (L/D-Verhältnis) größer 5 aufweist.

Das erfindungsgemäß als Komponente D) in einer Ausführungsform einzusetzende nicht-geschäumte und nicht-faserförmige gemahlene Glas wird bevorzugt durch Mahlung von Glas mit einer Mühle, bevorzugt einer Kugelmühle und besonders bevorzugt mit anschließender Sichtung bzw. Siebung erhalten. Bevorzugte Ausgangsmaterialien für die Vermahlung des in einer Ausführungsform als Komponente D) einzusetzenden nichtfaserförmigem und nicht-geschäumten, gemahlenen Glas sind auch Glasabfälle, wie sie insbesondere bei der Herstellung von Glaserzeugnissen als unerwünschtes Nebenprodukt und / oder als nicht spezifikationsgerechtes Hauptprodukt (sogenannte Offspec-Ware) anfallen. Hierzu gehört insbesondere Abfall-, Recycling- und Bruchglas wie es insbesondere bei der Herstellung von Fenster- oder Flaschenglas, sowie bei der Herstellung von glashaltigen Füll- und Verstärkungsstoffen, insbesondere in Form von sogenannten Schmelzekuchen, anfallen kann. Das Glas kann gefärbt sein, wobei nichtgefärbtes Glas als Ausgangsmaterial zum Einsatz als Komponente D) bevorzugt ist.

**Komponente E)**

Als Komponente E) wird wenigstens ein weiteres, von den Komponenten B), C) und D) verschiedenes **Additiv** eingesetzt. Bevorzugte als Komponente E) einzusetzende Additive sind Antioxidantien, Thermostabilisatoren, UV-Stabilisatoren, Gammastrahlenstabilisatoren, Hydrolysestabilisatoren, Antistatika, Emulgatoren, Nukleierungsmittel, Weichmacher, Verarbeitungshilfsmittel, Schlagzähmodifikatoren, Gleit- und/oder Entformungsmittel, Komponenten zur Verringerung der Wasseraufnahme, Fließhilfsmittel oder Elastomermodifikatoren, kettenverlängernd wirkende Additive, von Komponenten B) und C) verschiedene Flammschutzmittel oder Farbmittel. Die Additive können alleine

oder in Mischung bzw. in Form von Masterbatchen eingesetzt werden. Im Falle lasertransparenter Erzeugnisse sind als Komponente E) einzusetzende Additive so zu wählen, dass keine Laserabsorber wie insbesondere Ruß eingesetzt werden. Dem Fachmann sind laserabsorbierende Additive hinreichend bekannt.

Bevorzugte **Thermostabilisatoren** der Komponente E) sind sterisch gehinderte Phenole, insbesondere solche enthaltend mindestens eine 2,6 Di-tert.-butylphenyl-Gruppe und/oder 2-tert.-Butyl-6-methylphenyl-Gruppe, besonders bevorzugt *N*,*N'*-1,6-hexanediylbis[3,5-bis(1,1-dimethylethyl)-4-hydroxyphenylpropanamide] [CAS Nr. 23128-74-7], beispielsweise erhältlich als Irganox® 1098 der Fa. BASF, Ludwigshafen, Deutschland, ferner Phosphite, Hypophosphite, insbesondere Natriumhypophosphit $NaH_2PO_2$, Hydrochinone, aromatische sekundäre Amine, substituierte Resorcine, Salicylate, Benzotriazole und Benzophenone, 3,3'-Thiodipropionsäureester sowie verschieden substituierte Vertreter dieser Gruppen oder deren Mischungen.

In einer Ausführungsform können als Thermostabilisatoren der Komponente E) auch Kupfersalze, vorzugsweise in Kombination mit Natriumhypophosphit $NaH_2PO_2$ eingesetzt werden. Bevorzugt wird als Kupfersalz Kupfer(I) iodid [CAS Nr. 7681-65-4] und/oder Kupfer(triphenylphosphino)iodid [CAS Nr. 47107-74-4] eingesetzt. Vorzugsweise werden die Kupfersalze in Kombination mit Natriumhypophosphit $NaH_2PO_2$ oder mit wenigstens einem Alkaliiodid eingesetzt. Bevorzugtes Alkaliiodid ist Kaliumiodid [CAS Nr. 7681-11-0].

Als Komponente E) einzusetzende Thermostabilisatoren werden vorzugsweise zu 0,01 bis 2 Massenanteilen, besonders bevorzugt zu 0,05 bis 1 Massenanteilen, jeweils bezogen auf 100 Massenanteile der Komponente A) eingesetzt.

Als Komponente E) einzusetzende **UV-Stabilisatoren** werden vorzugsweise substituierte Resorcine, Salicylate, Benzotriazole und Benzophenone, HALS-Derivate ("Hindered Amine Light Stabilizers") enthaltend mindestens eine 2,2,6,6-Tetramethyl-4-piperidyl-Einheit oder Benzophenone eingesetzt.

Als Komponente E) einzusetzende UV-Stabilisatoren werden vorzugsweise zu 0,01 bis 2 Massenanteilen, besonders bevorzugt zu 0,1 bis 1 Massenanteilen, jeweils bezogen auf 100 Massenanteile der Komponente A) eingesetzt.

Als Komponente E) einzusetzende **Farbmittel** werden bevorzugt anorganische Pigmente, insbesondere Ultramarinblau, Bismutvanadat, Eisenoxid, Titandioxid, Zinksulfid, Zinn-Titan-Zinkoxide [CAS Nr. 923954-49-8], weiterhin organische Farbmittel, bevorzugt Phthalocyanine, Chinacridone, Benzimidazole, insbesondere Ni-2-hydroxy-napthylbenzimidazol [CAS Nr. 42844-93-9] und/oder Pyrimidin-azo-benzimidazol [CAS-Nr. 72102-84-2] und/oder Pigment Yellow 192 [CAS Nr. 56279-27-7], außerdem Perylene, Anthrachinone, insbesondere C.I. Solvent Yellow 163 [CAS Nr. 13676-91-0] eingesetzt, wobei diese Aufzählung nicht abschließend ist und wobei die Auswahl der Farbmittel unter besonderer Berücksichtigung der Anforderungen an das Lasertransmissions- bzw. das Laserabsorptionsverhalten zu erfolgen hat.

In einer Ausführungsform, vorzugsweise im Falle eines laserabsorbierenden Bauteils werden als Farbmittel auch Ruß und/oder Nigrosin eingesetzt.

Als Komponente E) einzusetzende **Nukleierungsmittel** werden bevorzugt Natrium- oder Calciumphenylphosphinat, Aluminiumoxid oder Siliziumdioxid sowie ganz besonders bevorzugt Talkum eingesetzt, wobei diese Aufzählung nicht abschließend ist.

Als Komponente E) einzusetzende **Fließhilfsmittel** werden bevorzugt Copolymerisate aus mindestens einem $\alpha$-Olefin mit mindestens einem Methacrylsäurester oder Acrylsäureester eines aliphatischen Alkohols eingesetzt. Besonders bevorzugt sind dabei Copolymerisate, bei denen das $\alpha$-Olefin aus Ethen und/oder Propen aufgebaut ist und der Methacrylsäurester oder Acrylsäureester als Alkoholkomponente lineare oder verzweigte Alkylgruppen mit 6 bis 20C-Atomen enthält. Ganz besonders bevorzugt ist Acrylsäure-(2-ethyl)-hexylester. Als Fließhilfsmittel geeignete Copolymerisate zeichnen sich neben der Zusammensetzung auch durch das niedrige Molekulargewicht aus. Dementsprechend sind für die erfindungsgemäß vor thermischem Abbau zu bewahrenden Zusammensetzungen vor allem Copolymerisate geeignet, die einen MFI-Wert gemessen bei 190°C und einer Belastung von 2,16 kg von mindestens 100 g / 10 min, bevorzugt von mindestens 150 g / 10 min, besonders bevorzugt von mindestens 300 g / 10 min aufweisen. Der MFI, Melt-Flow-Index, dient zur Charakterisierung des Flusses einer Schmelze eines Thermoplasten und unterliegt den Normen ISO 1133 oder ASTM D 1238. Insbesondere bevorzugt wird als Fließhilfsmittel ein Copolymerisat aus Ethen und Acrylsäure-(2-ethyl)-hexylester mit MFI 550 eingesetzt, bekannt als Lotryl® 37EH550.

Als Komponente E) einzusetzende **kettenverlängernde Additive** und als **Hydrolysestabilisatoren** werden bevorzugt di- oder mehrfunktionelle verzweigend oder kettenverlängernd wirkende Additive, enthaltend mindestens zwei verzweigend oder kettenverlängernd wirkende funktionelle Gruppen pro Molekül, eingesetzt. Als verzweigende bzw. kettenverlängende Additive werden niedermolekulare oder oligomere Verbindungen bevorzugt, die über mindestens zwei kettenverlängernd wirkende funktionelle Gruppen pro Molekül verfügen, welche mit primären und/oder sekundären Aminogruppen, und/oder Amidgruppen und/oder Carbonsäuregruppen reagieren können. Kettenverlängernd wirkende funktionelle Gruppen sind bevorzugt Isocyanate, Carbodiimide, Alkohole, Epoxide, Maleinsäureanhydrid, Oxazoline, Oxazine, Oxazolone, wobei Epoxide besonders bevorzugt sind.

Insbesondere bevorzugte di- oder mehrfunktionelle verzweigend oder kettenverlängernd wirkende Additive sind

Diepoxide auf Basis Diglycidylether (Bisphenol und Epichlorhydrin), auf Basis von Aminepoxidharz (Anilin und Epichlorhydrin), auf Basis von Diglycidylester (cycloaliphatische Dicarbonsäuren und Epichlorhydrin) einzeln oder in Mischungen sowie 2,2-Bis[p-hydroxy-phenyl]-propan-diglycidylether, Bis-[p-(N-methyl-N-2,3-epoxy-propylamino)-phenyl]-methan sowie epoxidierte Fettsäureester des Glycerins, enthaltend mindestens zwei Epoxidgruppen pro Molekül.

Besonders bevorzugte di- oder mehrfunktionelle verzweigend oder kettenverlängernd wirkende Additive sind Glycidylether, ganz besonders bevorzugt Bisphenol A-Diglycidylether [CAS Nr. 98460-24-3] oder epoxidierte Fettsäureester des Glycerins, sowie auch ganz besonders bevorzugt epoxidiertes Sojaöl [CAS Nr. 8013-07-8] und/oder epoxidiertes Leinöl.

Bevorzugt als Komponente E) einzusetzende **Weichmacher** sind Phthalsäuredioctylester, Phthalsäuredibenzylester, Phthalsäurebutylbenzylester, Kohlenwasserstofföle oder N-(n-Butyl)benzolsulfonamid.

Bevorzugt als Komponente E) einzusetzende **Elastomermodifikatoren** umfassen u.a. ein oder mehrere Pfropfpolymerisate von

E.1 5 bis 95 Gew.-%, vorzugsweise 30 bis 90 Gew.-%, wenigstens eines Vinylmonomeren und

E.2 95 bis 5 Gew.-%, vorzugsweise 70 bis 10 Gew.-% einer oder mehrerer Pfropfgrundlagen mit Glasübergangstemperaturen < 10°C, vorzugsweise < 0°C, besonders bevorzugt < -20°C, wobei die Gewichtsprozente sich auf 100 Gew.-% Elastomermodifikator beziehen.

Die Pfropfgrundlage E.2 hat im allgemeinen eine mittels Laserdiffraktometrie gemäß ISO 13320 zu bestimmende mittlere Teilchengröße d50-Wert von 0,05 bis 10 µm, vorzugsweise 0,1 bis 5 µm, besonders bevorzugt 0,2 bis 1 µm.

Monomere zu E.1 sind vorzugsweise Gemische aus

E.1.1 50 bis 99 Gew.-% Vinylaromaten und/oder kernsubstituierten Vinylaromaten, insbesondere Styrol, α-Methylstyrol, p-Methylstyrol, p-Chlorstyrol, und/oder Methacrylsäure-($C_1$-$C_8$)-Alkylester, insbesondere. Methylmethacrylat, Ethylmethacrylat) und

E.1.2 1 bis 50 Gew.-% Vinylcyanide, insbesondere ungesättigte Nitrile wie Acrylnitril und Methacrylnitril, und/oder (Meth)Acrylsäure-($C_1$-$C_8$)-alkylester, insbesondere Methylmethacrylat, Glycidylmethacrylat, n-Butylacrylat, t-Butylacrylat, und/oder Derivate ,insbesondere Anhydride und Imide ungesättigter Carbonsäuren, insbesondere Maleinsäureanhydrid oder N-Phenyl-Maleinimid, wobei die Gewichtsprozente sich auf 100 Gew.-% Elastomermodifikator beziehen.

Bevorzugte Monomere E.1.1 sind auszuwählen aus mindestens einem der Monomere Styrol, α-Methylstyrol und Methylmethacrylat, bevorzugte Monomere E.1.2 sind ausgewählt aus mindestens einem der Monomere Acrylnitril, Maleinsäureanhydrid, Glycidylmethacrylat und Methylmethacrylat. Besonders bevorzugte Monomere sind E.1.1 Styrol und E.1.2 Acrylnitril.

Für die in den Elastomermodifikatoren einzusetzenden Pfropfpolymerisate geeignete Pfropfgrundlagen E.2 sind beispielsweise Dienkautschuke, EPDM-Kautschuke, also solche auf Basis Ethylen/Propylen und gegebenenfalls Dien, ferner Acrylat-, Polyurethan-, Silikon-, Chloropren und Ethylen/Vinylacetat-Kautschuke. EPDM steht für Ethylen-Propylen-Dien-Kautschuk.

Bevorzugte Pfropfgrundlagen E.2 sind Dienkautschuke, insbesondere auf Basis Butadien, Isopren etc. oder Gemische von Dienkautschuken oder Copolymerisate von Dienkautschuken oder deren Gemischen mit weiteren copolymerisierbaren Monomeren, insbesondere gemäß E.1.1 und E.1.2, mit der Maßgabe, dass die Glasübergangstemperatur der Komponente E.2 bei <10°C, vorzugsweise bei <0°C, besonders bevorzugt bei <-10°C liegt.

Besonders bevorzugte Propfgrundlagen E.2 sind ABS-Polymerisate (Emulsions-, Masse- und Suspensions-ABS) wobei ABS für Acrylnitril-Butadien-Styrol steht, wie sie z. B. in der DE-A 2 035 390 oder in der DE-A 2 248 242 bzw. in Ullmann, Enzyklopädie der Technischen Chemie, Bd. 19 (1980), S. 277 - 295 beschrieben sind. Der Gelanteil der Pfropfgrundlage E.2 beträgt bevorzugt mindestens 30 Gew.-%, besonders bevorzugt mindestens 40 Gew.-% (in Toluol gemessen).

Die als Komponente E) einzusetzenden Elastomermodifikatoren bzw. Pfropfpolymerisate werden durch radikalische Polymerisation, bevorzugt durch Emulsions-, Suspensions-, Lösungs- oder Massepolymerisation, insbesondere durch Emulsions- oder Massepolymerisation hergestellt.

Besonders geeignete Pfropfkautschuke sind auch ABS-Polymerisate, die durch Redox-Initiierung mit einem Initiatorsystem aus organischem Hydroperoxid und Ascorbinsäure gemäß US-A 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten auch solche Produkte verstanden, die durch

(Co)Polymerisation der Pfropfmonomere in Gegenwart der Pfropfgrundlage gewonnen werden und bei der Aufarbeitung mit anfallen.

Ebenfalls geeignete Acrylatkautschuke basieren auf Pfropfgrundlagen E.2 die vorzugsweise Polymerisate aus Acrylsäurealkylestern, gegebenenfalls mit bis zu 40 Gew.-%, bezogen auf E.2 anderen polymerisierbaren, ethylenisch ungesättigten Monomeren. Zu den bevorzugten polymerisierbaren Acrylsäureestern gehören $C_1$-$C_8$-Alkylester, vorzugsweise Methyl-, Ethyl-, Butyl-, n-Octyl- und 2-Ethylhexylester; Halogenalkylester, vorzugsweise Halogen-$C_1$-$C_8$-alkylester, wie Chlorethylacrylat, Glycidylester sowie Mischungen dieser Monomeren. Dabei sind Propfpolymerisate mit Butylacrylat als Kern und Methylmethacrylaten als Schale, insbesondere. Paraloid® EXL2300, Fa. Dow Corning Corporation, Midland Michigan, USA, besonders bevorzugt.

Zur Vernetzung können alternativ zu den ethylenisch ungesättigten Monomeren Monomere mit mehr als einer polymerisierbaren Doppelbindung copolymerisiert werden. Bevorzugte vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, bevorzugt Ethylenglykoldimethacrylat, Allylmethacrylat; mehrfach ungesättigte heterocyclische Verbindungen, bevorzugt Trivinyl- und Triallylcyanurat; polyfunktionelle Vinylverbindungen, bevorzugt Di- und Trivinylbenzole; aber auch Triallylphosphat und Diallylphthalat.

Besonders bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Ganz besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5 Gew.-%, insbesondere 0,05 bis 2 Gew.-%, bezogen auf die Pfropfgrundlage E.2.

Bei cyclischen vernetzenden Monomeren mit mindestens 3 ethylenisch ungesättigten Gruppen ist es vorteilhaft, die Menge auf unter 1 Gew.-% der Pfropfgrundlage E.2 zu beschränken.

Bevorzugte "andere" polymerisierbare, ethylenisch ungesättigte Monomere, die neben den Acrylsäureestern gegebenenfalls zur Herstellung der Pfropfgrundlage E.2 dienen können, sind Acrylnitril, Styrol, $\alpha$-Methylstyrol, Acrylamide, Vinyl-$C_1$-$C_6$-alkylether, Methylmethacrylat, Glycidylmethacrylat, Butadien. Bevorzugte Acrylatkautschuke als Pfropfgrundlage E.2 sind Emulsionspolymerisate, die einen Gelgehalt von mindestens 60 Gew.-% aufweisen.

Weitere bevorzugt geeignete Pfropfgrundlagen gemäß E.2 sind Silikonkautschuke mit pfropfaktiven Stellen, wie sie in den DE-A 3 704 657**,** DE-A 3 704 655**,** DE-A 3 631 540 und DE-A 3 631 539 beschrieben werden.

Bevorzugte Propfpolymerisate mit einem Silikonanteil sind solche, die Methylmethacrylat oder Styrol-Acrylnitril als Schale und ein Silikon/Acrylat-Propf als Kern aufweisen. Bevorzugt als Schale einzusetzendes Styrol-Acrylnitril ist Metablen® SRK200. Bevorzugt als Schale einzusetzendes Methylmethacrylat ist Metablen® S2001 oder Metablen® S2030 oder Metablen® SX-005. Besonders bevorzugt wird Metablen® S2001 eingesetzt. Die Produkte mit dem Handelsnamen Metablen® sind erhältlich bei Mitsubishi Rayon Co., Ltd., Tokio, Japan.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, bevorzugt Ethylenglykoldimethacrylat, Allylmethacrylat; mehrfach ungesättigte heterocyclische Verbindungen, bevorzugt Trivinyl- und Triallylcyanurat; polyfunktionelle Vinylverbindungen, bevorzugt Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5 Gew.-%, insbesondere 0,05 bis 2 Gew.-%, bezogen auf die Pfropfgrundlage E.2.

Bei cyclischen vernetzenden Monomeren mit mindestens 3 ethylenisch ungesättigten Gruppen ist es vorteilhaft, die Menge auf unter 1 Gew.-% der Pfropfgrundlage E.2 zu beschränken.

Bevorzugte "andere" polymerisierbare, ethylenisch ungesättigte Monomere, die neben den Acrylsäureestern gegebenenfalls zur Herstellung der Pfropfgrundlage E.2 dienen können, sind Acrylnitril, Styrol, $\alpha$-Methylstyrol, Acrylamide, Vinyl-$C_1$-$C_6$-alkylether, Methylmethacrylat, Glycidylmethacrylat, Butadien. Bevorzugte Acrylatkautschuke als Pfropfgrundlage E.2 sind Emulsionspolymerisate, die einen Gelgehalt von mindestens 60 Gew.-% aufweisen.

Neben Elastomermodifikatoren, die auf Propfpolymeren beruhen, können ebenfalls nicht auf Propfpolymeren basierende Elastomermodifikatoren eingesetzt werden, die Glasübergangstemperaturen < 10°C, vorzugsweise < 0°C, besonders bevorzugt < -20°C aufweisen. Bevorzugt gehören hierzu Elastomere mit einer Blockcopolymerstruktur sowie weiterhin thermoplastisch aufschmelzbare Elastomere, insbesondere EPM-, EPDM- und/oder SEBS-Kautschuke (EPM = Ethylen-Propylen-Copolymer, EPDM = Ethylen-Propylen-Dien-Kautschuk und SEBS = Styrol-Ethen-Buten-Styrol Copolymer).

Als Komponente E) einzusetzende **Gleit- und/oder Entformungsmittel** sind bevorzugt langkettige Fettsäuren, insbesondere Stearinsäure oder Behensäure, deren Salze, insbesondere Ca- oder Zn-Stearat, sowie deren Esterderivate, insbesondere solche auf Basis von Pentaerythritol, insbesondere Fettsäureester des Pentaerythritols oder Amidderivate, insbesondere Ethylen-bis-stearylamid, Montanwachse sowie niedermolekulare Polyethylen- bzw. Polypropylenwachse.

Montanwachse im Sinne der vorliegenden Erfindung sind Mischungen aus geradkettigen, gesättigten Carbonsäuren mit Kettenlängen von 28 bis 32 C-Atomen.

Erfindungsgemäß werden besonders bevorzugt Gleit- und/oder Entformungsmittel aus der Gruppe der Ester gesättigter oder ungesättigter aliphatischer Carbonsäuren mit 8 bis 40 C-Atomen mit aliphatischen gesättigten Alkoholen oder Amide von Aminen mit 2 bis 40 C-Atomen mit ungesättigten aliphatischen Carbonsäuren mit 8 bis 40 C-Atomen bzw. statt jeweils der Carbonsäuren Metallsalze gesättigter oder ungesättigter aliphatischer Carbonsäuren mit 8 bis 40 C-Atomen eingesetzt.

Ganz besonders bevorzugt als Komponente E) einzusetzende Gleit- und/oder Entformungsmittel sind auszuwählen aus der Gruppe Pentaerythritoltetrastearat [CAS Nr. 115-83-3], Ethylen-bis-stearylamid, Calciumstearat und Ethylenglycoldimontanat. Insbesondere bevorzugt wird Calciumstearat [CAS Nr. 1592-23-0] oder Ethylen-bis-stearylamid [CAS Nr. 110-30-5] eingesetzt. Insbesondere besonders bevorzugt wird Ethylen-bis-stearylamid (Loxiol® EBS von Emery Oleochemicals) eingesetzt.

Als Komponente E) bevorzugt einzusetzende **Komponenten zur Verringerung der Wasseraufnahme** sind bevorzugt Polyester, wobei Polybutylenterepthalat und/oder Polyethylenterephthalat bevorzugt sind und Polyethylenterephthalat ganz besonders bevorzugt ist. Die Polyester werden dabei bevorzugt in Konzentrationen von 5 bis 20 Gew.-% und besonders bevorzugt in Konzentrationen von 7 bis 15 Gew-% eingesetzt, jeweils bezogen auf die gesamte Polymerzusammensetzung und mit der Maßgabe, dass die Summe aller Gewichtsprozente der Polymerzusammensetzung stets 100 Gew.-% ergibt.

Als Komponente E) bevorzugt einzusetzende weitere **Flammschutzmittel** sind von Komponente B) und C) verschiedene mineralische Flammschutzmittel, stickstoffhaltige Flammschutzmittel oder phosphorhaltige Flammschutzmittel.

In einer alternativen Ausführungsform können dabei - sofern der Bedarf es erfordert unter Berücksichtigung der Nachteile durch den Verlust der Lasertransparenz - auch solche Flammschutzmittel eingesetzt werden, die als Laserabsorber sich negativ auf die Lasertransmission eines Erzeugnisses auf Basis erfindungsgemäßer Polymerzusammensetzungen auswirken.

Unter den mineralischen Flammschutzmitteln ist Magnesiumhydroxid besonders bevorzugt. Magnesiumhydroxid [CAS Nr. 1309-42-8] kann aufgrund seiner Herkunft und Herstellungsweise verunreinigt sein. Typische Verunreinigungen sind z.B. Silicium-, Eisen-, Calcium- und/oder Aluminium-haltige Spezies, die beispielsweise in Form von Oxiden in den Magnesiumhydroxid-Kristallen eingelagert sein können. Das als mineralisches Flammschutzmittel einzusetzende Magnesiumhydroxid kann unbeschlichtet oder aber mit einer Schlichte versehen sein. Vorzugsweise wird das als mineralisches Flammschutzmittel einzusetzende Magnesiumhydroxid mit Schlichten auf Basis von Stearaten oder Aminosiloxanen, besonders bevorzugt mit Aminosiloxanen versehen. Vorzugsweise als mineralisches Flammschutzmittel einzusetzendes Magnesiumhydroxid hat eine mittels Laserdiffraktometrie gemäß **ISO 13320** zu bestimmende mittlere Teilchengröße d50 im Bereich von 0,5 $\mu$m bis 6 $\mu$m, wobei ein d50 im Bereich von 0,7 $\mu$m bis 3,8 $\mu$m bevorzugt und ein d50 im Bereich von 1,0 $\mu$m bis 2,6 $\mu$m besonders bevorzugt ist.

Erfindungsgemäß als Komponente E) einzusetzende mineralische Flammschutzmittel sind geeignete Magnesiumhydroxidtypen, insbesondere Magnifin® H5IV der Martinswerk GmbH, Bergheim, Deutschland oder Hidromag® Q2015 TC der Firma Penoles, Mexiko-Stadt, Mexico.

Bevorzugte als Komponente E) einzusetzende stickstoffhaltige Flammschutzmittel sind die Reaktionsprodukte aus Trichlortriazin, Piperazin und Morpholin gemäß CAS Nr. 1078142-02-5, insbesondere MCA PPM Triazin HF der Fa. MCA Technologies GmbH, Biel-Benken, Schweiz, ferner Melamincyanurat und Kondensationsprodukte des Melamins, insbesondere Melem, Melam, Melon bzw. höherkondensierte Verbindungen dieses Typs. Bevorzugte anorganische stickstoffhaltige Verbindungen sind Ammoniumsalze.

Ferner können auch Salze aliphatischer und aromatischer Sulfonsäuren und mineralische Flammschutzadditive, insbesondere Aluminiumhydroxid oder Ca-Mg-Carbonat-Hydrate **(**DE-A 4 236 122**)** als Komponente E) einzusetzende Flammschutzmittel eingesetzt werden.

In Frage kommen für den Einsatz als Flammschutzmittel der Komponente E) ferner Flammschutzmittelsynergisten aus der Gruppe der sauerstoff- stickstoff- oder schwefelhaltigen Metallverbindungen. Bevorzugt sind dabei zinkfreie Verbindungen insbesondere Molybdänoxid, Magnesiumoxid, Magnesiumcarbonat, Calciumcarbonat, Calciumoxid, Titannitrid, Magnesiumnitrid, Calciumphosphat, Calciumborat, Magnesiumborat oder deren Mischungen.

In einer alternativen Ausführungsform können als Flammschutzmittel der Komponente E) aber auch - sofern es der Bedarf erfordert - zinkhaltige Verbindungen eingesetzt werden. Hierzu zählen bevorzugt Zinkoxid, Zinkborat, Zinkstannat, Zinkhydroxystannat, Zinksulfid und Zinknitrid, oder deren Mischungen.

In einer alternativen Ausführungsform können als Flammschutzmittel der Komponente E) aber auch - sofern es der Bedarf erfordert - Calciumstannat, Calciumhydroxystannat eingesetzt werden.

Als Komponente E) einzusetzende Flammschutzmittel werden vorzugsweise aber auch Aluminiumsalze der Phosphonsäure eingesetzt. Unter Phosphonsäure wird dabei gemäß Wikipedia der Stoff mit der Summenformel $H_3PO_3$ [CAS-Nr. 13598-36-2] **(http://de.wikipedia.org/wiki/Phosphons%C3%A4ure)** verstanden. Die Salze der Phosphonsäure werden Phosphonate genannt. Die Phosphonsäure kann in zwei tautomeren Formen vorliegen, von denen eine ein freies Elektronenpaar am PhosphorAtom hat und die andere einen doppelt gebundenen Sauerstoff zum Phosphor (P=O) aufweist. Das Tautomeriegleichgewicht liegt dabei ganz auf der Seite der Form mit dem doppelt gebundenen Sauerstoff. Gemäß A. F. Holleman, E. Wiberg: Lehrbuch der Anorganischen Chemie. 101. Auflage. Walter de Gruyter, Berlin/New York 1995, ISBN 3-11-012641-9, S. 764 sollen die Begriffe "Phosphorige Säure" bzw. "Phosphite" nur für die tautomeren Spezies mit einem freien Elektronenpaar am Phosphor verwendet werden. Früher wurden die Begriffe "Phosphorige Säure" bzw. "Phosphite" allerdings auch für die tautomeren Formen mit doppelt gebundenem Sauerstoff zum Phosphor verwendet, so dass in der vorliegenden Erfindung die Begriffe Phosphonsäure und Phosphorige Säure bzw. Phosphonate und Phosphite synonym zueinander gebraucht werden.

Bevorzugt wird als Aluminiumsalze der Phosphonsäure mindestens eines aus der Gruppe primäres Aluminiumphosphonat $[Al(H_2PO_3)_3]$,

basisches Aluminiumphosphonat $[Al(OH)H_2PO_3)_2 \cdot 2H_2O]$,

$Al_2(HPO_3)_3 \cdot x\ Al_2O_3 \cdot n\ H_2O$ mit x im Bereich von 2,27 bis 1 und n im Bereich von 0 bis 4,

$Al_2(HPO_3)_3 \cdot (H_2O)_q$ der Formel (V) worin q für 0, 1, 2, 3 oder 4 steht, insbesondere Aluminiumphosphonattetrahydrat $[Al_2(HPO_3)_3 \cdot 4H_2O]$ oder sekundäres Aluminiumphosphonat $[Al_2(HPO_3)_3]$,

$Al_2M_z(HPO_3)_y(OH)_v \cdot (H_2O)_w$ der Formel (VI) worin M Alkalimetallion(en) bedeutet und z im Bereich von 0,01 bis 1,5, y im Bereich von 2,63 - 3,5, v im Bereich von 0 bis 2 und w im Bereich von 0 bis 4 liegt, und

$Al_2(HPO_3)_u(H_2PO_3)_t \cdot (H_2O)_s$ der Formel (VII) worin u im Bereich von 2 bis 2,99, t im Bereich von 2 bis 0,01 und s im Bereich von 0 bis 4 liegt,

wobei in Formel (VI) z, y und v sowie in Formel (VII) u und t nur solche Zahlen annehmen, dass das entsprechende Aluminiumsalz der Phosphonsäure als Ganzes ungeladen ist, ausgewählt.

Bevorzugte Alkalimetalle in Formel (VI) sind Natrium und Kalium.

Die beschriebenen Aluminiumsalze der Phosphonsäure weisen eine hohe Lasertransmission in Polyamiden auf und können einzeln oder im Gemisch eingesetzt werden.

Besonders bevorzugte Aluminiumsalze der Phosphonsäure werden ausgewählt aus der Gruppe

primäres Aluminiumphosphonat $[Al(H_2PO_3)_3]$,

sekundäres Aluminiumphosphonat $[Al_2(HPO_3)_3]$,

basisches Aluminiumphosphonat $[Al(OH)H_2PO_3)_2 \cdot 2H_2O]$,

Aluminiumphosphonattetrahydrat $[Al_2(HPO_3)_3 \cdot 4H_2O]$ und

$Al_2(HPO_3)_3 \cdot x\ Al_2O_3 \cdot n\ H_2O$ mit x im Bereich von 2,27 bis 1 und n im Bereich von 0 bis 4.

Ganz besonders bevorzugt sind sekundäres Aluminiumphosphonat $[Al_2(HPO_3)_3]$, CAS-Nr. 71449-76-8] und sekundäres Aluminiumphosphonattetrahydrat $[Al_2(HPO_3)_3 \cdot 4H_2O]$, CAS-Nr. 156024-71-4], insbesondere bevorzugt ist sekundäres Aluminiumphosphonat $[Al_2(HPO_3)_3]$.

Bevorzugte weitere phosphorhaltige Flammschutzmittel verschiedenen von Komponente B) und C) sind ferner weitere organische Metallphosphinate, roter Phosphor, anorganische Metallhypophosphite, weitere Metallphosphonate, Derivate der 9,10-Dihydro-9-oxa-10-phosphaphenanthren-10-oxide (DOPO-Derivate), Resorcinol-bis-(diphenylphosphat) (RDP) einschließlich Oligomere, Bisphenol-A-bis-diphenylphosphat (BDP) einschließlich Oligomere, Melaminpyrophosphat, Melaminpolyphosphat, Melaminpoly(aluminiumphosphat), Melamin-poly(zinkphosphat) oder Phenoxyphosphazenoligomere und deren Mischungen.

Weitere als Komponente E) einzusetzende Flammschutzmittel sind Kohlebildner, besonders bevorzugt Phenol-Formaldehydharze, Polycarbonate, Polyimide, Polysulfone, Polyethersulfone oder Polyetherketone sowie Antitropfmittel, insbesondere Tetrafluorethylenpolymerisate.

Die als Komponente E) einzusetzenden Flammschutzmittel können in Reinform, sowie über Masterbatche oder Kompaktate zugesetzt werden.

In einer alternativen Ausführungsform können als Flammschutzmittel aber auch - sofern der Bedarf es erfordert unter Berücksichtigung der Nachteile unter anderem durch den Verlust der Halogenfreiheit der Flammschutzmittel - halogenhaltige Flammschutzmittel eingesetzt werden. Bevorzugte halogenhaltige Flammschutzmittel sind handelsübliche organische Halogenverbindungen, besonders bevorzugt Ethylen-1,2-bistetrabromphthalimid, Decabromdiphenylethan, Tetrabrombisphenol-A-epoxyoligomer, Tetrabrombisphenol-A-oligocarbonat, Tetrachlorbisphenol-A-oligocarbonat, Polypentabrombenzylacrylat, bromiertes Polystyrol oder bromierte Polyphenylenether, die alleine oder in Kombination mit Synergisten, insbesondere Antimontrioxid oder Antimontpentoxid, eingesetzt werden können, wobei unter den halogenhaltigen Flammschutzmitteln bromiertes Polystyrol besonders bevorzugt ist. Bromiertes Polystyrol wird dabei bevorzugt zu 10 - 30 Gew.-%, besonders bevorzugt zu 15 - 25 Gew.% eingesetzt, jeweils bezogen auf die Gesamtzusammensetzung, wobei wenigstens eine der übrigen Komponenten soweit reduziert wird, dass die Summe aller Gewichtsprozente stets 100 ergibt.

Bromiertes Polystyrol ist in diversen Produktqualitäten kommerziell verfügbar. Beispiele hierfür sind z.B. Firemaster® PBS64 der Fa. Lanxess, Köln, Deutschland sowie Saytex® HP-3010 der Fa. Albemarle, Baton Rouge, USA.

Im Falle eines laserabsorbierenden Bauteils kann als Komponente E) unter Verlust der Eigenschaft einer hohen Lasertransmission wenigstens ein **Laserabsorber** ausgewählt aus der Gruppe Antimontrioxid, Zinnoxid, Zinnorthophosphat, Bariumtitanat, Aluminiumoxid, Kupferhydroxyphosphat, Kupferorthophosphat, Kaliumkupferdiphosphat, Kupferhydroxid, Antimonzinnoxid, Bismuttrioxid und Antrachinon eingesetzt werden. Besonders bevorzugt sind Zinnoxid, Antimontrioxid oder Antimonzinnoxid. Ganz besonders bevorzugt ist Antimontrioxid.

Der Laserabsorber, insbesondere das Antimontrioxid, kann direkt als Pulver oder in Form von Masterbatchen eingesetzt werden. Bevorzugte Masterbatche sind solche auf Basis von Polyamid und/oder Polyolefinen, bevorzugt Polyethylen. Ganz besonders bevorzugt wird Antimontrioxid in Form eines Polyamid 6-basierten Masterbatches eingesetzt.

Der Laserabsorber kann einzeln oder als Gemisch mehrerer Laserabsorber eingesetzt werden.

Laserabsorber können Laserlicht einer bestimmten Wellenlänge absorbieren. In der Praxis liegt diese Wellenlänge im Bereich von 157 nm bis 10,6 μm. Beispiele für Laser dieser Wellenlängen sind in WO2009/003976 A1 beschrieben. Bevorzugt werden Nd:YAG Laser, mit denen Wellenlängen von 1064, 532, 355 und 266 nm realisiert werden können, und $CO_2$-Laser eingesetzt.

**Bevorzugte Polymerzusammensetzungen**

Besonders bevorzugt sind Polymerzusammensetzungen enthaltend

A) auf 100 Massenanteile Polyamid 6,

B) 2 bis 100 Massenanteile, bevorzugt 5 bis 60 Massenanteile, besonders bevorzugt 7 bis 40 Massenanteile, insbesondere bevorzugt 8 bis 20 Massenanteile Aluminiummethylphosphonat der Formel (Ia)

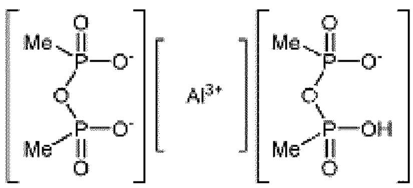

(Ia)

C) 5 bis 120 Massenanteile, bevorzugt 7 bis 80 Massenanteile, besonders bevorzugt 8 bis 60 Massenanteile, insbesondere bevorzugt 10 bis 50 Massenanteile Aluminium-tris(diethylphosphinat), und

D) 3 bis 300 Massenanteile, bevorzugt 5 bis 200 Massenanteile, besonders bevorzugt zu 15 bis 120 Massenanteile, insbesondere bevorzugt 20 bis 90 Massenanteile Glasfasern.

Insbesondere bevorzugt sind Polymerzusammensetzungen enthaltend

A) auf 100 Massenanteile Polyamid 6,

B) 2 bis 100 Massenanteile, bevorzugt 5 bis 60 Massenanteile, besonders bevorzugt 7 bis 40 Massenanteile, insbesondere bevorzugt 8 bis 20 Massenanteile Aluminiummethylphosphonat der Formel (Ia)

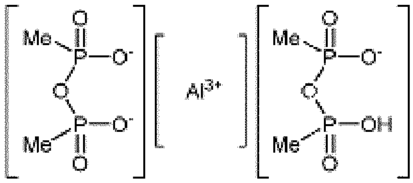

(Ia)

C) 5 bis 120 Massenanteile, bevorzugt 7 bis 80 Massenanteile, besonders bevorzugt 8 bis 60 Massenanteile, insbesondere bevorzugt 10 bis 50 Massenanteile Aluminium-tris(diethylphosphinat),

D) 3 bis 300 Massenanteile, bevorzugt 5 bis 200 Massenanteile, besonders bevorzugt zu 15 bis 120 Massenanteile, insbesondere bevorzugt 20 bis 90 Massenanteile Glasfasern, und

E) 0,01 bis 30 Massenanteilen, bevorzugt 0,1 bis 15 Massenanteilen, besonders bevorzugt 0,3 bis 5 Massenanteilen, insbesondere bevorzugt 0,5 bis 3 Massenanteilen an *N,N'*-1,6-hexanediylbis[3,5-bis(1,1-dimethylethyl)-4-hydroxyphenylpropanamide und/oder Ethylen-bis-stearylamid und/oder Talkum.

Vorzugsweise wird Komponente B) in geringeren Massenanteilen als Komponente C) eingesetzt.

**Bevorzugte Verfahrensvarianten**

Ferner ist bevorzugter Gegenstand der vorliegenden Erfindung ein **Verfahren** zur Herstellung von Erzeugnissen, vorzugsweise Erzeugnissen für die Elektromobilität, für Haushaltsgeräte sowie im Elektronik- und Elektrobereich, indem man die Komponenten

A) 100 Massenanteile Polyamid 6 mit

B) 2 bis 100 Massenanteilen, bevorzugt 5 bis 60 Massenanteilen, besonders bevorzugt 7 bis 40 Massenanteilen, insbesondere bevorzugt 8 bis 20 Massenanteilen Aluminiummethylphosphonat der Formel (Ia)

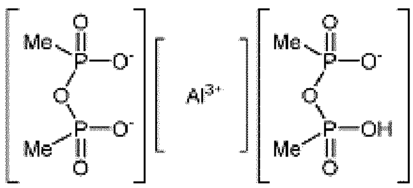

(Ia)

und

C) 5 bis 120 Massenanteilen, bevorzugt 7 bis 80 Massenanteilen, besonders bevorzugt 8 bis 60 Massenanteilen, insbesondere bevorzugt 10 bis 50 Massenanteilen Aluminium-tris(diethylphosphinat),
sowie mit

D) 3 bis 300 Massenanteilen, bevorzugt 5 bis 200 Massenanteilen, besonders bevorzugt zu 15 bis 120 Massenanteilen, insbesondere bevorzugt 20 bis 90 Massenanteilen Glasfasern und gegebenenfalls mit weiteren Additiven in

wenigstens einem Mischaggregat mischt oder vermengt und schließlich im Spritzguss verarbeitet.

Vorzugsweise werden die Komponenten zunächst zu einer Formmasse geknetet, compoundiert, extrudiert oder gewalzt. Bevorzugt erfolgt dieses Mischen bei einer Temperatur im Bereich von 230 bis 300°C, besonders bevorzugt durch Compoundieren auf einem gleichläufigen Zweiwellenextruder oder Buss-Kneter. Es kann vorteilhaft sein, einzelne Komponenten vorzumischen.

Besonders bevorzugter Gegenstand der vorliegenden Erfindung ist ein **Verfahren** zur Herstellung von Erzeugnissen, vorzugsweise Erzeugnissen für die Elektromobilität, für Haushaltsgeräte sowie im Elektronik- und Elektrobereich, indem man die Komponenten

A) 100 Massenanteile Polyamid 6 mit

B) 2 bis 100 Massenanteilen, bevorzugt 5 bis 60 Massenanteilen, besonders bevorzugt 7 bis 40 Massenanteilen, insbesondere bevorzugt 8 bis 20 Massenanteilen Aluminiummethylphosphonat der Formel (Ia)

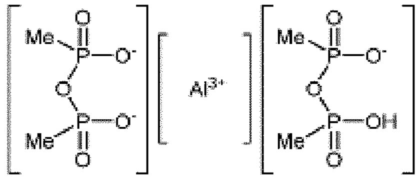

(Ia)

C) 5 bis 120 Massenanteilen, bevorzugt 7 bis 80 Massenanteilen, besonders bevorzugt 8 bis 60 Massenanteilen, insbesondere bevorzugt 10 bis 50 Massenanteilen Aluminium-tris(diethylphosphinat),

D) 3 bis 300 Massenanteilen, bevorzugt 5 bis 200 Massenanteilen, besonders bevorzugt zu 15 bis 120 Massenanteilen, insbesondere bevorzugt 20 bis 90 Massenanteilen Glasfasern und mit

E) 0,01 bis 30 Massenanteilen, bevorzugt 0,1 bis 15 Massenanteilen, besonders bevorzugt 0,3 bis 5 Massenanteilen, insbesondere bevorzugt 0,5 bis 3 Massenanteilen *N,N'*-1,6-hexanediylbis[3,5-bis(1,1-dimethylethyl)-4-hydroxyphenylpropanamide und/oder mit Ethylen-bis-stearylamid und/oder mit Talkum in wenigstens einem Mischaggregat mischt oder vermengt und schließlich im Spritzguss verarbeitet.

Vorzugsweise wird Komponente B) in geringeren Massenanteilen als Komponente C) eingesetzt.

Das Verfahren des Spritzgusses zeichnet sich dadurch aus, dass der Rohstoff, bevorzugt in Granulatform, in einem beheizten zylindrischen Hohlraum aufgeschmolzen (plastifiziert) und als Spritzmasse unter Druck in einen temperierten Hohlraum gespritzt wird. Nach dem Abkühlen (Erstarren) der Masse wird das Spritzgussteil entformt.

Man unterscheidet

1. Plastifizieren / Aufschmelzen

2. Einspritzphase (Füllvorgang)

3. Nachdruckphase (wegen thermischer Kontraktion bei der Kristallisation)

4. Entformen.

Eine Spritzgießmaschine besteht aus einer Schließeinheit, der Spritzeinheit, dem Antrieb und der Steuerung. Zur Schließeinheit gehören feste und bewegliche Aufspannplatten für das Werkzeug, eine Stirnplatte sowie Säulen und Antrieb der beweglichen Werkzeugaufspannplatte. (Kniehebelgelenk oder hydraulische Schließeinheit).

Eine Spritzeinheit umfasst den elektrisch beheizbaren Zylinder, den Antrieb der Schnecke (Motor, Getriebe) und die Hydraulik zum Verschieben der Schnecke und Spritzeinheit. Die Aufgabe der Spritzeinheit besteht darin, das Pulver bzw. das Granulat aufzuschmelzen, zu dosieren, einzuspritzen und nachzudrücken (wegen Kontraktion). Das Problem des Rückflusses der Schmelze innerhalb der Schnecke (Leckströmung) wird durch Rückstromsperren gelöst.

Im Spritzgießwerkzeug wird dann die einströmende Schmelze gelöst, gekühlt und somit das zu fertigende Erzeugnis gefertigt. Notwendig dazu sind immer zwei Werkzeughälften. Beim Spritzguss unterscheidet man folgende Funktionskomplexe:

- Angusssystem
- Formbildende Einsätze
- Entlüftung
- Maschinen- und Kraftaufnahme
- Entformungssystem und Bewegungsübertragung
- Temperierung

Die vorliegende Erfindung betrifft folglich auch Erzeugnisse erhältlich durch Spritzguss der erfindungsgemäßen Zusammensetzungen.

**Bevorzugte Verwendungsvarianten**

Bevorzugter Gegenstand der Erfindung ist zudem die Verwendung von Polymerzusammensetzungen enthaltend

A) auf 100 Massenanteile Polyamid 6,

B) 2 bis 100 Massenanteile, bevorzugt 5 bis 60 Massenanteile, besonders bevorzugt 7 bis 40 Massenanteile, insbesondere bevorzugt 8 bis 20 Massenanteile wenigstens eines Aluminiumsalzes der allgemeinen Formel (I)

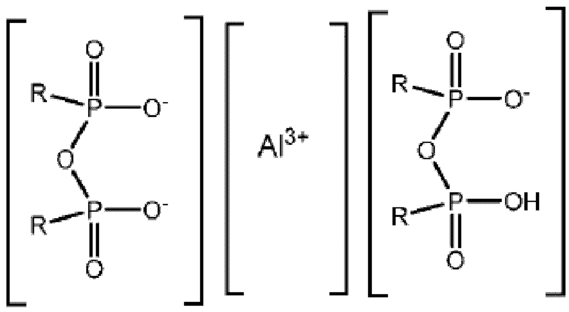

(I),

worin R für $C_1$-$C_{12}$-Alkyl steht, vorzugsweise für Methyl, Ethyl, Isopropyl oder iso-Butyl, tert.-Butyl oder n-Butyl, besonders bevorzugt für Ethyl oder Methyl, ganz besonders bevorzugt für Methyl, und

C) 5 bis 120 Massenanteile, bevorzugt 7 bis 80 Massenanteile, besonders bevorzugt 8 bis 60 Massenanteile, insbesondere bevorzugt 10 bis 50 Massenanteile wenigstens eines organischen Phosphinsäuresalzes der Formel (II) und/oder wenigstens eines Diphosphinsäuresalzes der Formel (III) und/oder deren Polymere,

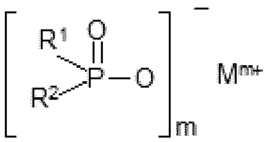

(II)

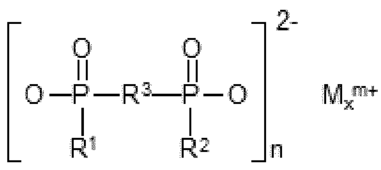

(III)

worin

$R^1$, $R^2$ gleich oder verschieden sind und für ein lineares oder verzweigtes $C_1$-$C_6$-Alkyl, und/oder für $C_6$-$C_{14}$-Aryl stehen,

$R^3$ für lineares oder verzweigtes $C_1$-$C_{40}$-Alkylen, $C_6$-$C_{10}$-Arylen oder für $C_1$-$C_6$-Alkyl-$C_6$-$C_{10}$-arylen oder $C_6$-$C_{10}$-Aryl-$C_1$-$C_6$-alkylen steht,

M für Aluminium, Zink oder Titan steht,

m für eine ganze Zahl von 1 bis 4 steht;

n für eine ganze Zahl von 1 bis 3 steht,

x für 1 und 2 steht,

wobei n, x und m in Formel (III) gleichzeitig nur solche ganzen Zahlen annehmen können, dass das Diphosphinsäuresalz der Formel (III) als Ganzes ungeladen ist, und

D) 3 bis 300 Massenanteile, bevorzugt 5 bis 200 Massenanteile, besonders bevorzugt zu 15 bis 120 Massenanteile, insbesondere bevorzugt 20 bis 90 Massenanteile wenigstens eines Füll und/oder Verstärkungsstoffs zur Herstellung von Erzeugnissen für den Einsatz in Kraftfahrzeugen, in Bauteilen für die Elektro- und Elektronikindustrie oder in Haushaltsgeräten.

Besonders bevorzugt ist die Verwendung von Polymerzusammensetzungen enthaltend

A) auf 100 Massenanteile Polyamid 6,

B) 2 bis 100 Massenanteile, bevorzugt 5 bis 60 Massenanteile, besonders bevorzugt 7 bis 40 Massenanteile, insbesondere bevorzugt 8 bis 20 Massenanteile Aluminiummethylphosphonat der Formel (Ia)

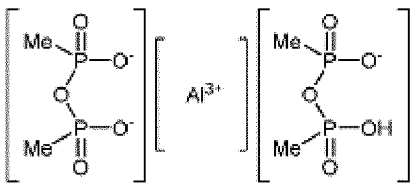

(Ia)

C) 5 bis 120 Massenanteile, bevorzugt 7 bis 80 Massenanteile, besonders bevorzugt 8 bis 60 Massenanteile, insbesondere bevorzugt 10 bis 50 Massenanteile Aluminium-tris(diethylphosphinat), und

D) 3 bis 300 Massenanteile, bevorzugt 5 bis 200 Massenanteile, besonders bevorzugt zu 15 bis 120 Massenanteile, insbesondere bevorzugt 20 bis 90 Massenanteile Glasfasern zur Herstellung von Erzeugnissen für den Einsatz in Kraftfahrzeugen, in Bauteilen für die Elektro- und Elektronikindustrie oder in Haushaltsgeräten.

Ganz besonders bevorzugt ist die Verwendung von Polymerzusammensetzungen enthaltend

A) auf 100 Massenanteile Polyamid 6,

B) 2 bis 100 Massenanteile, bevorzugt 5 bis 60 Massenanteile, besonders bevorzugt 7 bis 40 Massenanteile, insbesondere bevorzugt 8 bis 20 Massenanteile Aluminiummethylphosphonat der Formel (Ia)

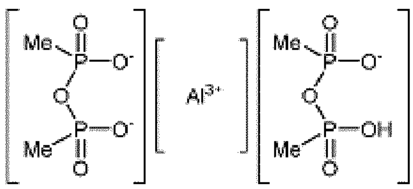

(Ia)

C) 5 bis 120 Massenanteile, bevorzugt 7 bis 80 Massenanteile, besonders bevorzugt 8 bis 60 Massenanteile, insbesondere bevorzugt 10 bis 50 Massenanteile Aluminium-tris(diethylphosphinat),

D) 3 bis 300 Massenanteile, bevorzugt 5 bis 200 Massenanteile, besonders bevorzugt zu 15 bis 120 Massenanteile, insbesondere bevorzugt 20 bis 90 Massenanteile Glasfasern, und

E) 0,01 bis 30 Massenanteilen, bevorzugt 0,1 bis 15 Massenanteilen, besonders bevorzugt 0,3 bis 5 Massenanteilen, insbesondere bevorzugt 0,5 bis 3 Massenanteilen *N,N'*-1,6-hexanediylbis[3,5-bis(1,1-dimethylethyl)-4-hydroxy-phenylpropanamide und/oder Ethylen-bis-stearylamid und/oder Talkum zur Herstellung von Erzeugnissen für den Einsatz in Kraftfahrzeugen, in Bauteilen für die Elektro- und Elektronikindustrie oder in Haushaltsgeräten.

Vorzugsweise wird Komponente B) in geringeren Massenanteilen als Komponente C) eingesetzt.

Die vorliegende Erfindung betrifft aber auch die **Verwendung** von 2 bis 100 Massenanteilen, bevorzugt 5 bis 60 Massenanteilen, besonders bevorzugt 7 bis 40 Massenanteilen, insbesondere bevorzugt 8 bis 20 Massenanteilen Aluminiummethylphosphonat der Formel (Ia)

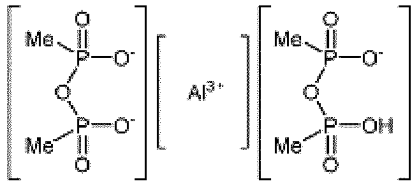

(Ia)

und 5 bis 120 Massenanteilen, bevorzugt 7 bis 80 Massenanteilen, besonders bevorzugt 8 bis 60 Massenanteilen, insbesondere bevorzugt 10 bis 50 Massenanteilen Aluminium-tris(diethylphosphinat) sowie 3 bis 300 Massenanteilen, bevorzugt 5 bis 200 Massenanteilen, besonders bevorzugt zu 15 bis 120 Massenanteilen, insbesondere bevorzugt 20 bis 90 Massenanteilen Glasfasern, jeweils bezogen auf 100 Massenanteile Polyamid 6, zur Herstellung **lasertransparenter Zusammensetzungen oder Erzeugnisse,** vorzugsweise mit einem GWIT bei 0,75mm Wandstärken von mindestens 800ºC.

Die vorliegende Erfindung betrifft aber auch die **Verwendung** von 2 bis 100 Massenanteilen, bevorzugt 5 bis 60 Massenanteilen, besonders bevorzugt 7 bis 40 Massenanteilen, insbesondere bevorzugt 8 bis 20 Massenanteilen Aluminiummethylphosphonat der Formel (Ia)

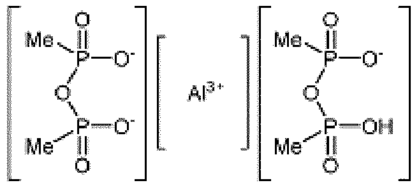

(Ia)

und 5 bis 120 Massenanteilen, bevorzugt 7 bis 80 Massenanteilen, besonders bevorzugt 8 bis 60 Massenanteilen, insbesondere bevorzugt 10 bis 50 Massenanteilen Aluminium-tris(diethylphosphinat), 3 bis 300 Massenanteilen, bevorzugt 5 bis 200 Massenanteilen, besonders bevorzugt zu 15 bis 120 Massenanteilen, insbesondere bevorzugt 20 bis 90 Massenanteilen Glasfasern und 0,01 bis 30 Massenanteilen, bevorzugt 0,1 bis 15 Massenanteilen, besonders bevorzugt 0,3 bis 5 Massenanteilen, insbesondere bevorzugt 0,5 bis 3 Massenanteilen *N,N'*-1,6-hexanediylbis[3,5-bis(1,1-dimethylethyl)-4-hydroxy-phenylpropanamide und/oder Ethylen-bis-stearylamid und/oder Talkum, jeweils bezogen auf 100 Massenanteile Polyamid 6, zur Herstellung **lasertransparenter Zusammensetzungen** oder Erzeugnisse, vorzugsweise mit einem GWIT bei 0,75mm Wandstärken von mindestens 800°C.

## Beispiele

Zum Nachweis der erfindungsgemäß beschriebenen Verbesserungen der Eigenschaften wurden zunächst durch Compoundierung entsprechende Polyamid 6 basierte Polymerzusammensetzungen angefertigt. Die einzelnen Komponenten gemäß **Tab. I** wurden hierzu in einem Zweiwellenextruder (ZSK 25 Compounder der Fa. Coperion Werner & Pfleiderer (Stuttgart, Deutschland)) bei Temperaturen im Bereich von 260 bis 290°C gemischt, als Strang ausgetragen, bis zur Granulierbarkeit abgekühlt und granuliert. Nach dem Trocknen (in der Regel zwei Tage bei 80°C im Vakuumtrockenschrank) erfolgte die Verarbeitung des Granulats im Spritzguss bei Temperaturen im Bereich von 260 bis 280°C zu Normprüfkörpern für die jeweiligen Prüfungen, wobei eine Spritzgießmaschine des Typs Arburg 320-210-500 verwendet wurde.

**Verfahren zur Herstellung des als Komponente B) eingesetzten Aluminiummethylphosphonats**

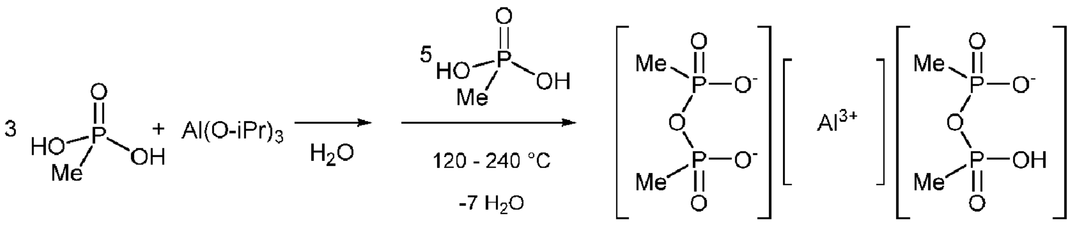


(Ia)

Ein Reaktionskessel wurde mit 83 g Methylphosphonsäure beschickt und auf 120°C erhitzt. Ein Zwischenprodukt hergestellt aus 50 g Methylphosphonsäure und 35,4 g Aluminium-tris(isopropoxid) wurde in Gegenwart von Wasser dem Reaktionskessel zugegeben. Die resultierende Lösung, welche als Zwischenprodukte Methylphosphonsäure und Aluminium-methylphosphonat im Molverhältnis von 5 : 1 enthielt, wurde unter mechanischem Rühren auf 240°C erhitzt. Das Rühren wurde bei 240°C etwa 30 Minuten lang fortgesetzt bis sich ein Feststoff bildete. Anschließend wurden 500 ml Wasser zugegeben und diese Mischung für 16 h gerührt, währenddessen eine gleichmäßige Aufschlämmung entstand. Das Produkt wurde schließlich abfiltriert, mit 750 ml gewaschen und getrocknet. Das Resultat waren 64,3 g des als Komponente B) einzusetzenden Produkts der Formel (Ia) als feine farblose Kristalle bei einer Ausbeute von 93 %.

Die **Glühdrahtbeständigkeit** wurde anhand der Glühdrahtentzündlichkeitsprüfung GWIT (Glow-Wire-Ignition-Temperature) nach DIN EN 60695-2-13 bestimmt. Bei der GWIT-Prüfung wird die Glühdrahtentzündungstemperatur angegeben, die 25K (bzw. 30K bei Temperaturen im Bereich von 900°C bis 960°C) höher ist, als die maximale Glühdrahttemperatur, die in drei aufeinander folgenden Tests auch während der Einwirkzeit des Glühdrahtes nicht zur Entzündung führt. Als Entzündung gilt dabei eine Flamme mit Brennzeit > 5sec. Für die Prüfungen wurden Rundplatten mit einem Durchmesser von 80mm und einer Dicke von 0,75mm verwendet. In den Beispielen wird zusätzlich als "GWIT-Brennzeit" die tatsächliche Brennzeit bei der Temperatur angegeben, die gemäß DIN EN 60695-2-13 nicht zu einer Entzündung geführt hat, d.h. ≤ 5sec war. Hierbei wird jeweils die höchste Einzelbrennzeit der in drei aufeinanderfolgenden Tests ermittelten Brennzeiten aufgeführt.

Die **Lasertransparenz** der im Rahmen der vorliegenden Erfindung untersuchten Proben wurde in Übereinstimmung mit der **DVS-Richtlinie 2243 (01/2014) "Laserstrahlschweißen thermoplastischer Kunststoffe"** anhand von Rundplatten mit 80mm Durchmesser und 0,75 mm Dicke im nahen Infrarot (NIR) mit dem Transmissionsmessgerät LPKF TMG3 der Firma LPKF Laser & Electronics AG, Garbsen, Deutschland, das zuvor mit einem nach DIN EN ISO/IEC 17025 erzeugten Messnormal kalibriert wurde, bei einer Laserwellenlänge von 980 nm gemessen; siehe: **LPKF AG 101016-DE: "Einfache Transmissionsmessung für Kunststoffe LPKF TMG3".**

Die **Flammwidrigkeit** der Prüfkörper mit einer Abmessung von 125 mm • 13 mm • 0,75 mm wurde nach der Methode UL94V **(**Underwriters Laboratories Inc. Standard of Safety, "Test for Flammability of Plastic Materials for Parts in Devices and Appliances", S. 14 - 18 Northbrook 1998**)** bestimmt.

Die **Schlagzähigkeit** nach IZOD erhielt man gemäß ISO180-A an Prüfkörpern der Abmessung 80 mm • 10 mm • 4 mm.

## Edukte:

| | |
|---|---|
| Komponente A): | Polyamid 6 (Durethan® B26, Fa. Lanxess Deutschland GmbH, Köln, Deutschland) mit einer nach ISO 307 in 0,5 gew.-%iger Lösung in 96 gew.-%iger Schwefelsäure bei 25°C gemessenen Viskositätszahl von 120ml/g |
| Komponente B): | Aluminiummethylphosphonat der Formel (Ia) |
| Komponente C): | Aluminium-tris(diethylphosphinat), [CAS-Nr. 225789-38-8] (Exolit® OP1230 der Fa. Clariant SE, Muttenz, Schweiz) |
| Komponente D): | Schnittglasfaser CS 7997D der Firma Lanxess Deutschland GmbH, Köln, Deutschland [mittlerer Faserdurchmesser 10 µm, mittlere Faserlänge 4,5 mm, E-Glas (DIN 1259), mit Silan beschlichtet] |

**Tab. I**

| Edukte | Einheit | Bsp. 1 |
|---|---|---|
| Komponente A/1 | [Massenanteil] | 100 |
| Komponente B/1 | [Massenanteil] | 17,1 |
| Komponente C/1 | [Massenanteil] | 41,1 |
| Komponente D/1 | [Massenanteil] | 68,5 |
| | | |
| UL94 bei 0,75mm | [Klasse] | V0 |
| GWIT bei 0,75mm | [°C] | 800 |
| GWIT-Brennzeit | [s] | 0 |
| IZOD | kJ/m2] | 66 |
| LPKF-Lasertransmission | [%] | 67,2 |

Angaben der Komponenten in **Tab. I** in Massenanteile bezogen auf 100 Massenanteile der Komponente A1

**Tab. I** zeigt, dass das erfindungsgemäße Beispiel 1 bei 0,75mm Wandstärken bzw. Prüfkörperdicken sowohl einen sehr hohen GWIT von 800°C als auch im UL94-Test eine V0 Klassifizierung erreicht.

Hinzu kommt eine exzellente Lasertransparenz von weit über 50% und eine nach DIN EN ISO 180 bestimmte Schlagzähigkeit von 66 kJ/$m^2$.

## Patentansprüche

1. Polymerzusammensetzungen enthaltend

A) auf 100 Massenanteile Polyamid 6,

B) 2 bis 100 Massenanteile wenigstens eines Aluminiumsalzes der allgemeinen Formel (I)

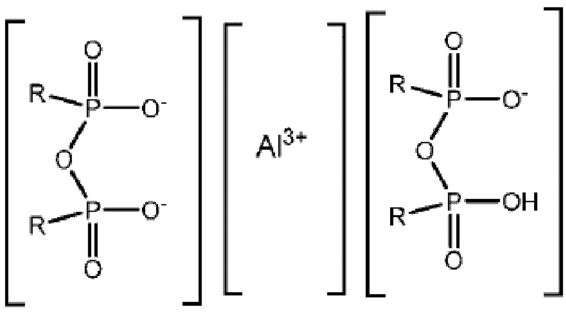

(I),

worin R für $C_1$-$C_{12}$-Alkyl steht,

C) 5 bis 120 Massenanteile wenigstens eines organischen Phosphinsäuresalzes der Formel (II) und/oder wenigstens eines Diphosphinsäuresalzes der Formel (III) und/oder deren Polymere,

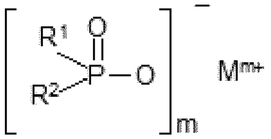

(II)

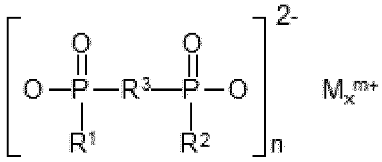

(III)

worin

$R^1$, $R^2$ gleich oder verschieden sind und für ein lineares oder verzweigtes $C_1$-$C_6$-Alkyl, und/oder für $C_6$-$C_{14}$-Aryl stehen,
$R^3$ für lineares oder verzweigtes $C_1$-$C_{10}$-Alkylen, $C_6$-$C_{10}$-Arylen oder für $C_1$-$C_6$-Alkyl-$C_6$-$C_{10}$-arylen oder $C_6$-$C_{10}$-Aryl-$C_1$-$C_6$-alkylen steht,
M für Aluminium, Zink oder Titan steht,
m für eine ganze Zahl von 1 bis 4 steht;
n für eine ganze Zahl von 1 bis 3 steht,
x für 1 und 2 steht,
wobei n, x und m in Formel (III) gleichzeitig nur solche ganzen Zahlen annehmen können, dass das Diphosphinsäuresalz der Formel (III) als Ganzes ungeladen ist, und

D) 3 bis 300 Massenanteile wenigstens eines Füll und/oder Verstärkungsstoffs.

2. Polymerzusammensetzungen gemäß Anspruch 1, **dadurch gekennzeichnet, dass** R in Formel (I) für Methyl, Ethyl, Isopropyl oder iso-Butyl, tert.-Butyl oder n-Butyl steht, bevorzugt für Ethyl oder Methyl, besonders bevorzugt für Methyl.

3. Polymerzusammensetzungen gemäß Anspruch 1 oder 2, **dadurch gekennzeichnet, dass** M in den Formeln (II) oder (III) für Aluminium steht

4. Polymerzusammensetzungen gemäß einem oder mehreren der Ansprüche 1 bis 3, **dadurch gekennzeichnet, dass** $R^1$, $R^2$ in den Formeln (II) und (III) gleich oder verschieden sind und $C_1$-$C_6$-Alkyl, linear oder verzweigt, und/oder Phenyl bedeuten.

5. Polymerzusammensetzungen gemäß einem oder mehreren der Ansprüche 1 bis 4, **dadurch gekennzeichnet, dass** $R^1$, $R^2$ in den Formeln (II) und (III gleich oder verschieden sind und Methyl, Ethyl, n-Propyl, iso-Propyl, n-Butyl, tert.-Butyl, n-Pentyl und/oder Phenyl bedeuten.

6. Polymerzusammensetzungen gemäß einem oder mehreren der Ansprüche 1 bis 5, **dadurch gekennzeichnet, dass** $R^3$ in Formel (III) Methylen, Ethylen, n-Propylen, iso-Propylen, n-Butylen, tert.-Butylen, n-Pentylen, n-Octylen, n-Dodecylen, Phenylen, Naphthylen, Methyl-phenylen, Ethylphenylen, tert.-Butylphenylen, Methylnaphthylen, Ethylnaphthylen, tert.-Butylnaphthylen, Phenylmethylen, Phenylethylen, Phenylpropylen oder Phenylbutylen bedeutet, vorzugsweise Phenylen oder Naphthylen.

7. Polymerzusammensetzungen gemäß einem oder mehreren der Ansprüche 1 bis 6, **dadurch gekennzeichnet, dass** m in Formel (II) für 2 und 3 steht, besonders bevorzugt für 3.

8. Polymerzusammensetzungen gemäß einem oder mehreren der Ansprüche 1 bis 6, **dadurch gekennzeichnet, dass** n in Formel (III) für 1 und 3 steht, besonders bevorzugt für 3.

9. Polymerzusammensetzungen gemäß einem oder mehreren der Ansprüche 1 bis 6, **dadurch gekennzeichnet, dass** x in Formel (III) für 1 und 2 steht, besonders bevorzugt für 2.

10. Polymerzusammensetzungen gemäß einem oder mehreren der Ansprüche 1 bis 6, **dadurch gekennzeichnet, dass** als Komponente C) Aluminiumtris(diethylphosphinat) eigesetzt wird.

11. Polymerzusammensetzungen gemäß einem oder mehreren der Ansprüche 1 bis 10, **dadurch gekennzeichnet, dass** als Komponente D) Glasfasern eingesetzt werden.

**12.** Polymerzusammensetzungen gemäß einem oder mehreren der Ansprüche 1 bis 11, **dadurch gekennzeichnet, dass** Komponente B) in geringeren Massenanteilen eingesetzt wird als Komponente C).

**13.** Erzeugnisse, insbesondere Erzeugnisse für die Elektromobilität, für Haushaltsgeräte sowie im Elektronik- und Elektrobereich basierend auf Polymerzusammensetzungen gemäß einem oder mehreren der Ansprüche 1 bis 12.

**14.** Verfahren zur Herstellung von Erzeugnissen, **dadurch gekennzeichnet, dass** man die Komponente A) 100 Massenanteile Polyamid 6 mit

B) 2 bis 100 Massenanteilen wenigstens eines Aluminiumsalzes der allgemeinen Formel (I)

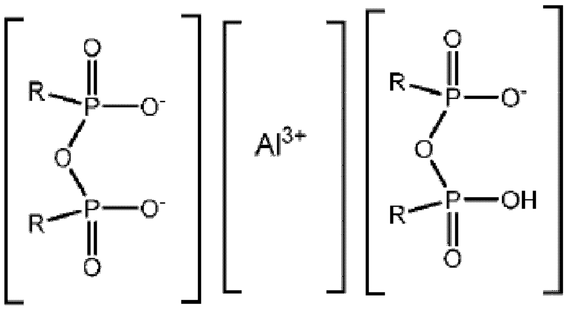
(I),

worin R für $C_1$-$C_{12}$-Alkyl steht, und
C) 5 bis 120 Massenanteilen wenigstens eines organischen Phosphinsäuresalzes der Formel (II) und/oder wenigstens eines Diphosphinsäuresalzes der Formel (III) und/oder deren Polymere,

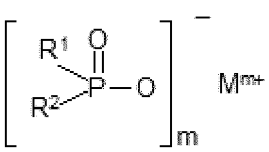
(II)

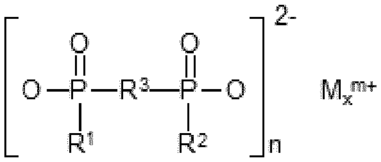
(III)

worin

$R^1$, $R^2$ gleich oder verschieden sind und für ein lineares oder verzweigtes $C_1$-$C_6$-Alkyl, und/oder für $C_6$-$C_{14}$-Aryl stehen,
$R^3$ für lineares oder verzweigtes $C_1$-$C_{10}$-Alkylen, $C_6$-$C_{10}$-Arylen oder für $C_1$-$C_6$-Alkyl-$C_6$-$C_{10}$-arylen oder $C_6$-$C_{10}$-Aryl-$C_1$-$C_6$-alkylen steht,
M für Aluminium, Zink oder Titan steht,
m für eine ganze Zahl von 1 bis 4 steht;
n für eine ganze Zahl von 1 bis 3 steht,
x für 1 und 2 steht,
wobei n, x und m in Formel (III) gleichzeitig nur solche ganzen Zahlen annehmen können, dass das Diphosphinsäuresalz der Formel (III) als Ganzes ungeladen ist, mit

D) 3 bis 300 Massenanteilen wenigstens eines Füll und/oder Verstärkungsstoffs sowie gegebenenfalls mit weiteren Additiven in wenigstens einem Mischaggregat mischt oder vermengt und schließlich im Spritzguss verarbeitet.

**15.** Verwendung von 2 bis 100 Massenanteilen wenigstens eines Aluminiumsalzes der allgemeinen Formel (I)

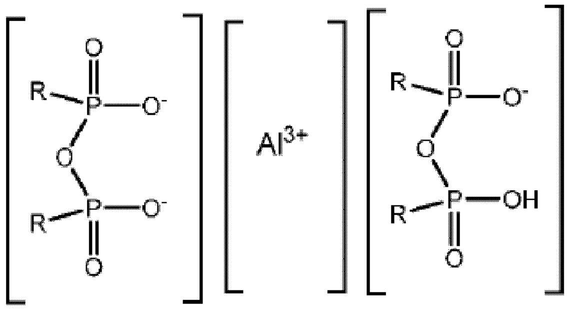

(I),

worin R für $C_1$-$C_{12}$-Alkyl steht, und
5 bis 120 Massenanteilen wenigstens eines organischen Phosphinsäuresalzes der Formel (II) und/oder wenigstens eines Diphosphinsäuresalzes der Formel (III) und/oder deren Polymere,

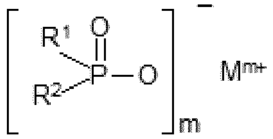

(II)

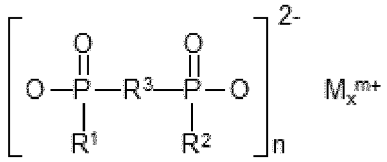

(III)

worin
$R^1$, $R^2$ gleich oder verschieden sind und für ein lineares oder verzweigtes $C_1$-$C_6$-Alkyl, und/oder für $C_6$-$C_{14}$-Aryl stehen,
$R^3$ für lineares oder verzweigtes $C_1$-$C_{10}$-Alkylen, $C_6$-$C_{10}$-Arylen oder für $C_1$-$C_6$-Alkyl-$C_6$-$C_{10}$-arylen oder $C_6$-$C_{10}$-Aryl-$C_1$-$C_6$-alkylen steht,
M für Aluminium, Zink oder Titan steht,
m für eine ganze Zahl von 1 bis 4 steht;
n für eine ganze Zahl von 1 bis 3 steht,
x für 1 und 2 steht,
wobei n, x und m in Formel (III) gleichzeitig nur solche ganzen Zahlen annehmen können, dass das Diphosphinsäuresalz der Formel (III) als Ganzes ungeladen ist, jeweils bezogen auf 100 Massenanteile Polyamid 6, das mit 3 bis 300 Massenanteilen wenigstens eines Füll und/oder Verstärkungsstoffs verstärkt ist, zur Herstellung lasertransparenter Zusammensetzungen oder Erzeugnisse.

**16.** Verwendung gemäß Anspruch 15, **dadurch gekennzeichnet, dass** die lasertransparenten Zusammensetzungen oder Erzeugnisse zudem einem GWIT bei 0,75mm Wandstärken von mindestens 800ºC aufweisen.

## Claims

**1.** Polymer compositions containing

A) per 100 parts by mass of polyamide 6,
B) 2 to 100 parts by mass of at least one aluminium salt of general formula (I)

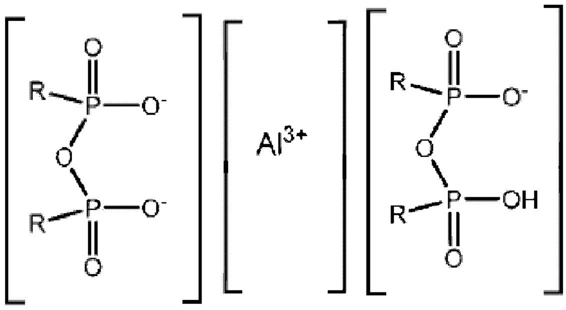

(I),

wherein R represents $C_1$-$C_{12}$-alkyl,

C) 5 to 120 parts by mass of at least one organic phosphinic acid salt of formula (II) and/or at least one diphosphinic acid salt of formula (III) and/or polymers thereof,

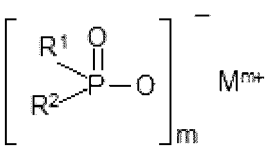

(II)

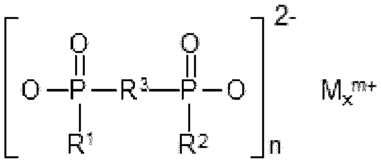

(III)

wherein

$R^1$, $R^2$ are identical or different and represent a linear or branched $C_1$-$C_6$-alkyl and/or $C_6$-$C_{14}$-aryl,
$R^3$ represents linear or branched $C_1$-$C_{10}$-alkylene, $C_6$-$C_{10}$-arylene or $C_1$-$C_6$-alkyl-$C_6$-$C_{10}$-arylene or $C_6$-$C_{10}$-aryl-$C_1$-$C_6$-alkylene,
M represents aluminium, zinc or titanium,
m represents an integer from 1 to 4,
n represents an integer from 1 to 3,
x represents 1 and 2,
wherein n, x and m in formula (III) can simultaneously assume only integers such that the diphosphinic acid salt of formula (III) as a whole is uncharged and

D) 3 to 300 parts by mass of at least one filler and/or reinforcer.

**2.** Polymer compositions according to Claim 1, **characterized in that** R in formula (I) represents methyl, ethyl, isopropyl or isobutyl, tert-butyl or n-butyl, preferably ethyl or methyl, particularly preferably methyl.

**3.** Polymer compositions according to Claim 1 or 2, **characterized in that** M in formula (II) or (III) represents aluminium.

**4.** Polymer compositions according to one or more of Claims 1 to 3, **characterized in that** $R^1$, $R^2$ in formulae (II) and (III) are identical or different and represent linear or branched $C_1$-$C_6$-alkyl, and/or phenyl.

**5.** Polymer compositions according to one or more of Claims 1 to 4, **characterized in that** $R^1$, $R^2$ in formulae (II) and (III) are identical or different and represent methyl, ethyl, n-propyl, isopropyl, n-butyl, tert-butyl, n-pentyl and/or phenyl.

**6.** Polymer compositions according to one or more of Claims 1 to 5, **characterized in that** $R^3$ in formula (III) represent methylene, ethylene, n-propylene, isopropylene, n-butylene, tert-butylene, n-pentylene, n-octylene, n-dodecylene, phenylene, naphthylene, methylphenylene, ethylphenylene, tert-butylphenylene, methylnaphthylene, ethylnaphthylene, tert-butylnaphthylene, phenylmethylene, phenylethylene, phenylpropylene or phenylbutylene, preferably phenylene or naphthylene.

**7.** Polymer compositions according to one or more of Claims 1 to 6, **characterized in that** m in formula (II) represents 2 and 3, particularly preferably 3.

**8.** Polymer compositions according to one or more of Claims 1 to 6, **characterized in that** n in formula (III) represents 1

and 3, particularly preferably 3.

**9.** Polymer compositions according to one or more of Claims 1 to 6, **characterized in that** x in formula (III) represents 1 and 2, particularly preferably 2.

**10.** Polymer compositions according to one or more of Claims 1 to 6, **characterized in that** aluminium tris(diethyl phosphinate) is employed as component C).

**11.** Polymer compositions according to one or more of Claims 1 to 10, **characterized in that** glass fibres are employed as component D).

**12.** Polymer compositions according to one or more of Claims 1 to 11, **characterized in that** component B) is employed in smaller mass fractions than component C).

**13.** Products, especially products for electromobility, for household appliances and in the electronics and electricals sector based on polymer compositions according to one or more of Claims 1 to 12.

**14.** Process for producing products, **characterized in that** it comprises mixing or blending component A) 100 parts by mass of polyamide 6 with

B) 2 to 100 parts by mass of at least one aluminium salt of general formula (I),

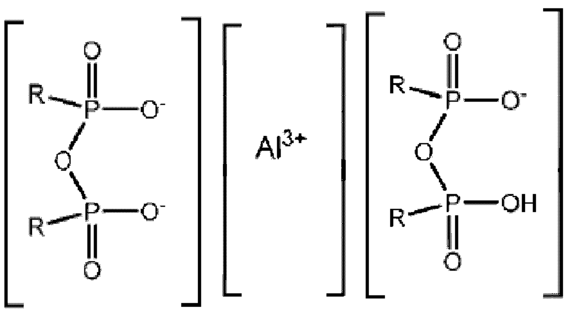
(I),

wherein R represents $C_1$-$C_{12}$-alkyl, and
C) 5 to 120 parts by mass of at least one organic phosphinic acid salt of formula (II) and/or at least one diphosphinic acid salt of formula (III) and/or polymers thereof,

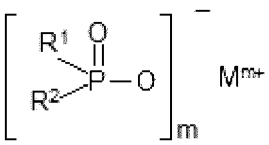
(II)

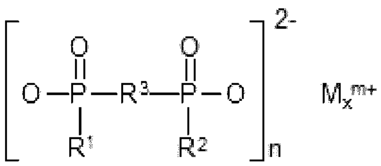
(III)

wherein

$R^1$, $R^2$ are identical or different and represent a linear or branched $C_1$-$C_6$-alkyl and/or $C_6$-$C_{14}$-aryl,
$R^3$ represents linear or branched $C_1$-$C_{10}$-alkylene, $C_6$-$C_{10}$-arylene or $C_1$-$C_6$-alkyl-$C_6$-$C_{10}$-arylene or $C_6$-$C_{10}$-aryl-$C_1$-$C_6$-alkylene,
M represents aluminium, zinc or titanium,
m represents an integer from 1 to 4,
n represents an integer from 1 to 3,
x represents 1 and 2,
wherein n, x and m in formula (III) can simultaneously assume only integers such that the diphosphinic acid salt of formula (III) as a whole is uncharged, and

D) 3 to 300 parts by mass of at least one filler and/or reinforcer and optionally with further additives in at least one

mixing unit and finally subjecting the resulting mixture to injection moulding.

**15.** Use of 2 to 100 parts by mass of at least one aluminium salt of general formula (I),

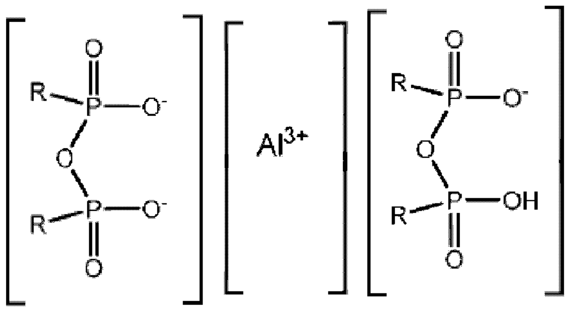

(I),

wherein R represents $C_1$-$C_{12}$-alkyl, and
5 to 120 parts by mass of at least one organic phosphinic acid salt of formula (II) and/or at least one diphosphinic acid salt of formula (III) and/or polymers thereof,

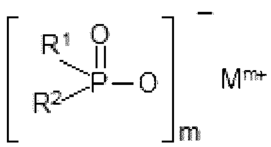

(II)

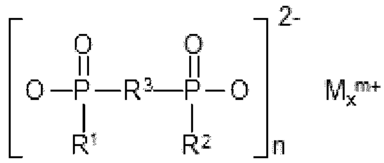

(III)

Wherein
$R^1$, $R^2$ are identical or different and represent a linear or branched $C_1$-$C_6$-alkyl and/or $C_6$-$C_{14}$-aryl,
$R^3$ represents linear or branched $C_1$-$C_{10}$-alkylene, $C_6$-$C_{10}$-arylene or $C_1$-$C_6$-alkyl-$C_6$-$C_{10}$-arylene or $C_6$-$C_{10}$-aryl-$C_1$-$C_6$-alkylene,
M represents aluminium, zinc or titanium,
m represents an integer from 1 to 4,
n represents an integer from 1 to 3,
x represents 1 and 2,
wherein n, x and m in formula (III) can simultaneously assume only integers such that the diphosphinic acid salt of formula (III) as a whole is uncharged, in each case based on 100 parts by mass of polyamide 6 reinforced with 3 to 300 parts by mass of at least one filler and/or reinforcer, for producing laser-transparent compositions or products.

**16.** Use according to Claim 15, **characterized in that** the laser-transparent compositions or products also have a GWIT at wall thicknesses of 0.75 mm of at least 800°C.

**Revendications**

**1.** Compositions polymères contenant

A) pour 100 parties en masse de polyamide 6,
B) 2 à 100 parties en masse d'au moins un sel d'aluminium de formule générale (I),

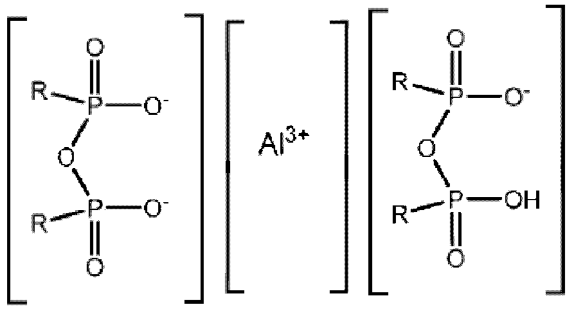

(I),

dans laquelle R représente ($C_1$-$C_{12}$)-alkyle,

C) 5 à 120 parties en masse d'au moins un sel organique d'acide phosphinique de formule (II) et/ou d'au moins un sel d'acide diphosphinique de formule (III) et/ou de leurs polymères,

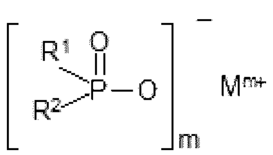

(II)

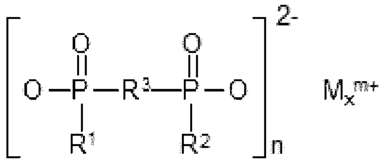

(III)

dans lesquelles

$R^1$, $R^2$ sont identiques ou différents et représentent $C_1$-$C_6$-alkyle linéaire ou ramifié et/ou $C_6$-$C_{14}$-aryle,
$R^3$ représente $C_1$-$C_{10}$-alkylène linéaire ou ramifié, $C_6$-$C_{10}$-arylène ou $C_1$-$C_6$-alkyl-$C_6$-$C_{10}$-arylène ou $C_6$-$C_{10}$-aryl-$C_1$-$C_6$-alkylène,
M représente aluminium, zinc ou titane,
m représente un nombre entier de 1 à 4;
n représente un nombre entier de 1 à 3,
x représente 1 et 2,
n, x et m dans la formule (III) ne pouvant représenter simultanément que des nombres entiers tels que le sel d'acide diphosphinique de formule (III) dans son ensemble n'est pas chargé et

D) 3 à 300 parties en poids d'au moins une charge et/ou substance de renforcement.

2. Compositions polymères selon la revendication 1, **caractérisées en ce que** R dans la formule (I) représente méthyle, éthyle, isopropyle ou iso-butyle, tert-butyle ou n-butyle, de préférence éthyle ou méthyle, de manière particulièrement préférée méthyle.

3. Compositions polymères selon la revendication 1 ou 2, **caractérisées en ce que** M dans les formules (II) ou (III) représente aluminium.

4. Compositions polymères selon l'une ou plusieurs des revendications 1 à 3, **caractérisées en ce que** $R^1$, $R^2$ dans les formules (II) et (III) sont identiques ou différents et signifient $C_1$-$C_6$-alkyle, linéaire ou ramifié, et/ou phényle.

5. Compositions polymères selon l'une ou plusieurs des revendications 1 à 4, **caractérisées en ce que** $R^1$, $R^2$ dans les formules (II) et (III) sont identiques ou différents et signifient méthyle, éthyle, n-propyle, iso-propyle, n-butyle, tert-butyle, n-pentyle et/ou phényle.

6. Compositions polymères selon l'une ou plusieurs des revendications 1 à 5, **caractérisées en ce que** $R^3$ dans la formule (III) signifie méthylène, éthylène, n-propylène, isopropylène, n-butylène, tert-butylène, n-pentylène, n-octylène, n-dodécylène, phénylène, naphtylène, méthylphénylène, éthylphénylène, tert-butylphénylène, méthylnaphtylène, éthylnaphtylène, tert-butylnaphtylène, phénylméthylène, phényléthylène, phénylpropylène ou phénylbutylène, de préférence phénylène ou naphtylène.

7. Compositions polymères selon l'une ou plusieurs des revendications 1 à 6, **caractérisées en ce que** m dans la

formule (II) représente 2 et 3, de manière particulièrement préférée 3.

**8.** Compositions polymères selon l'une ou plusieurs des revendications 1 à 6, **caractérisées en ce que** n dans la formule (III) représente 1 et 3, de manière particulièrement préférée 3.

**9.** Compositions polymères selon l'une ou plusieurs des revendications 1 à 6, **caractérisées en ce que** x dans la formule (III) représente 1 et 2, de manière particulièrement préférée 2.

**10.** Compositions polymères selon l'une ou plusieurs des revendications 1 à 6, **caractérisées en ce qu'**on utilise, comme composant C), du tris(diéthylphosphinate) d'aluminium.

**11.** Compositions polymères selon l'une ou plusieurs des revendications 1 à 10, **caractérisées en ce qu'**on utilise, comme composant D), des fibres de verre.

**12.** Compositions polymères selon l'une ou plusieurs des revendications 1 à 11, **caractérisées en ce que** le composant B) est utilisé en moins de parties en masse que le composant C).

**13.** Produits, en particulier produits pour la mobilité électrique, pour des appareils électroménagers ainsi que dans le domaine électronique et électrique, à base de compositions polymères selon l'une ou plusieurs des revendications 1 à 12.

**14.** Procédé de fabrication de produits, **caractérisé en ce qu'**on mélange ou mixe le composant A) 100 parties en masse de polyamide 6 avec

B) 2 à 100 parties en masse d'au moins un sel d'aluminium de formule générale (I),

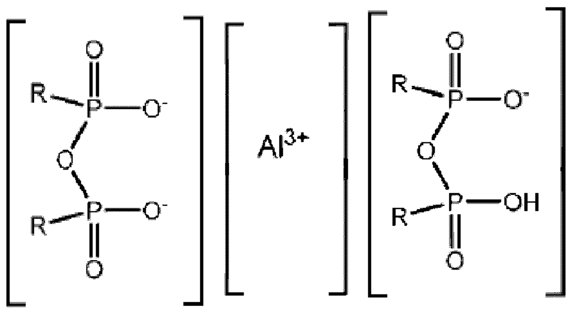

(I),

dans laquelle R représente ($C_1$-$C_{12}$)-alkyle et

C) 5 à 120 parties en masse d'au moins un sel organique d'acide phosphinique de formule (II) et/ou d'au moins un sel d'acide diphosphinique de formule (III) et/ou de leurs polymères,

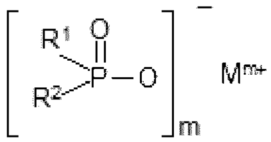

(II)

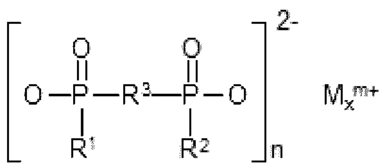

(III)

dans lesquelles

$R^1$, $R^2$ sont identiques ou différents et représentent $C_1$-$C_6$-alkyle linéaire ou ramifié et/ou $C_6$-$C_{14}$-aryle,
$R^3$ représente $C_1$-$C_{10}$-alkylène linéaire ou ramifié, $C_6$-$C_{10}$-arylène ou $C_1$-$C_6$-alkyl-$C_6$-$C_{10}$-arylène ou $C_6$-$C_{10}$-aryl-$C_1$-$C_6$-alkylène,
M représente aluminium, zinc ou titane,
m représente un nombre entier de 1 à 4 ;
n représente un nombre entier de 1 à 3,
x représente 1 et 2,

n, x et m dans la formule (III) ne pouvant représenter simultanément que des nombres entiers tels que le sel d'acide diphosphinique de formule (III) dans son ensemble n'est pas chargé, avec

D) 3 à 300 parties en poids d'au moins une charge et/ou substance de renforcement ainsi que les cas échéant avec d'autres additifs dans au moins un appareil de mélange puis on met en œuvre dans un procédé de moulage par injection.

**15.** Utilisation de 2 à 100 parties en masse d'au moins un sel d'aluminium de formule générale (I),

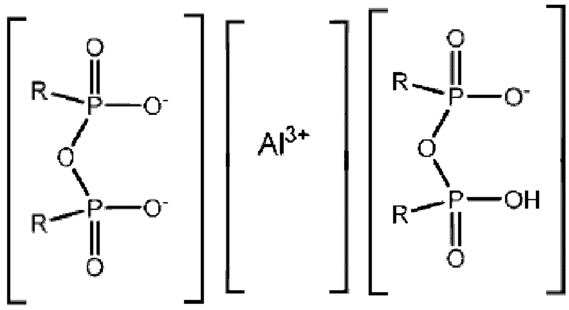

(I),

dans laquelle R représente ($C_1$-$C_{12}$)-alkyle et
5 à 120 parties en masse d'au moins un sel organique d'acide phosphinique de formule (II) et/ou d'au moins un sel d'acide diphosphinique de formule (III) et/ou de leurs polymères,

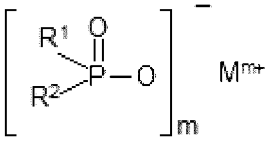

(II)

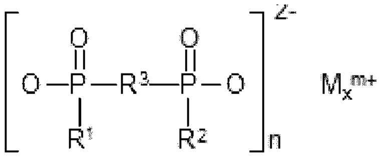

(III)

dans lesquelles
$R^1$, $R^2$ sont identiques ou différents et représentent $C_1$-$C_6$-alkyle linéaire ou ramifié et/ou $C_6$-$C_{14}$-aryle,
$R^3$ représente $C_1$-$C_{10}$-alkylène linéaire ou ramifié, $C_6$-$C_{10}$-arylène ou $C_1$-$C_6$-alkyl-$C_6$-$C_{10}$-arylène ou $C_6$-$C_{10}$-aryl-$C_1$-$C_6$-alkylène,
M représente aluminium, zinc ou titane,
m représente un nombre entier de 1 à 4 ;
n représente un nombre entier de 1 à 3,
x représente 1 et 2,
n, x et m dans la formule (III) ne pouvant représenter simultanément que des nombres entiers tels que le sel d'acide diphosphinique de formule (III) dans son ensemble n'est pas chargé, à chaque fois par rapport à 100 parties en masse de polyamide 6, qui est renforcé avec 3 à 300 parties en masse d'au moins une charge et/ou substance de renforcement, pour la fabrication de compositions ou de produits transparent(e) au laser.

**16.** Utilisation selon la revendication 15, **caractérisée en ce que** les compositions ou produits transparent(e)s au laser présentent en outre une GWIT (température d'allumage du fil incandescent) à des épaisseurs de paroi de 0,75 mm d'au moins 800°C.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2006029711 A1
- WO 2020132075 A1
- WO 2021076169 A1
- WO 9739053 A
- DE 2035390 A
- DE 2248242 A
- US 4937285 A
- DE 3704657 A
- DE 3704655 A
- DE 3631540 A
- DE 3631539 A
- DE 4236122 A
- WO 2009003976 A1


### In der Beschreibung aufgeführte Nicht-Patentliteratur


- Test for Flammability of Plastic Materials for Parts in Devices and Appliances. Northbrook. Underwriters Laboratories Inc. Standard of Safety, 1998, 14-18
- Test for Flammability of Plastic Materials for Parts in Devices and Appliances. Northbrook. Underwriters Laboratories Inc. Standard of Safety, 1998, 14-18
- *CHEMICAL ABSTRACTS*, 225789-38-8
- *CHEMICAL ABSTRACTS*, 7440-44-0
- *CHEMICAL ABSTRACTS*, 65997-17-3
- *CHEMICAL ABSTRACTS*, 7631-86-9
- *CHEMICAL ABSTRACTS*, 14808-60-7
- *CHEMICAL ABSTRACTS*, 1344-95-2
- *CHEMICAL ABSTRACTS*, 10101-39-0
- *CHEMICAL ABSTRACTS*, 546-93-0
- *CHEMICAL ABSTRACTS*, 1332-58-7
- *CHEMICAL ABSTRACTS*, 92704-41-1
- *CHEMICAL ABSTRACTS*, 1317-65-3
- *CHEMICAL ABSTRACTS*, 1302-76-7
- *CHEMICAL ABSTRACTS*, 1318-94-1
- *CHEMICAL ABSTRACTS*, 12251-00-2
- *CHEMICAL ABSTRACTS*, 7727-43-7
- *CHEMICAL ABSTRACTS*, 68476-25-5
- *CHEMICAL ABSTRACTS*, 13983-17-0
- *CHEMICAL ABSTRACTS*, 67479-91-8
- *CHEMICAL ABSTRACTS*, 12125-28-9
- *CHEMICAL ABSTRACTS*, 14807-96-6
- Chemie Ingenieur Technik. Wiley-VCH Verlags GmbH, 2000, 273-276
- *CHEMICAL ABSTRACTS*, 23128-74-7
- *CHEMICAL ABSTRACTS*, 7681-65-4
- *CHEMICAL ABSTRACTS*, 47107-74-4
- *CHEMICAL ABSTRACTS*, 7681-11-0
- *CHEMICAL ABSTRACTS*, 923954-49-8
- *CHEMICAL ABSTRACTS*, 42844-93-9
- *CHEMICAL ABSTRACTS*, 72102-84-2
- *CHEMICAL ABSTRACTS*, 56279-27-7
- *CHEMICAL ABSTRACTS*, 13676-91-0
- *CHEMICAL ABSTRACTS*, 98460-24-3
- *CHEMICAL ABSTRACTS*, 8013-07-8
- **ULLMANN**. Enzyklopädie der Technischen Chemie. 1980, vol. 19, 277-295
- *CHEMICAL ABSTRACTS*, 115-83-3
- *CHEMICAL ABSTRACTS*, 1592-23-0
- *CHEMICAL ABSTRACTS*, 110-30-5
- *CHEMICAL ABSTRACTS*, 1309-42-8
- *CHEMICAL ABSTRACTS*, 1078142-02-5
- *CHEMICAL ABSTRACTS*, 13598-36-2
- **A. F. HOLLEMAN** ; **E. WIBERG**. Lehrbuch der Anorganischen Chemie. Walter de Gruyter, 1995, 764
- *CHEMICAL ABSTRACTS*, 71449-76-8
- *CHEMICAL ABSTRACTS*, 156024-71-4